(19) Europäisches Patentamt
European Patent Office
Office européen des brevets

(11) EP 1 910 436 B1

(12) **EUROPÄISCHE PATENTSCHRIFT**

(45) Veröffentlichungstag und Bekanntmachung des Hinweises auf die Patenterteilung:
**28.01.2009 Patentblatt 2009/05**

(21) Anmeldenummer: **06762577.2**

(22) Anmeldetag: **14.07.2006**

(51) Int Cl.:
*C08G 18/08* (2006.01) *C09J 175/16* (2006.01)
*C08G 18/75* (2006.01) *C08G 18/67* (2006.01)

(86) Internationale Anmeldenummer:
**PCT/EP2006/006886**

(87) Internationale Veröffentlichungsnummer:
**WO 2007/012412 (01.02.2007 Gazette 2007/05)**

(54) **NICHTWÄSSRIGE DISPERSION VON POLYURETHAN(METH)ACRYLATPARTIKELN IN REAKTIVVERDÜNNER**

ANHYDROUS DISPERSION OF POLYURETHANE(METH)ACRYLATE PARTICLES IN A REACTIVE DILUENT

DISPERSION NON AQUEUSE DE PARTICULES DE POLYURETHANE(METH)ACRYLATE DANS UN DILUANT REACTIF

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.07.2005 DE 102005035235**

(43) Veröffentlichungstag der Anmeldung:
**16.04.2008 Patentblatt 2008/16**

(73) Patentinhaber: **Fachhochschule Gelsenkirchen
45877 Gelsenkirchen (DE)**

(72) Erfinder:
- **KOCH, Klaus-Uwe
45665 Recklinghausen (DE)**
- **RUTZ, Daniele
CH-6517 Arbedo (CH)**

(74) Vertreter: **Luderschmidt, Schüler & Partner Patentanwälte
John-F.-Kennedy-Strasse 4
65189 Wiesbaden (DE)**

(56) Entgegenhaltungen:
**DE-A1- 3 248 132**

- **D.RUTZ: "Impact Modifier für Klebstoffe-Nicht wässrige Dispersionen von Polyurethanen in Estern-" 2004, DIPLOMARBEIT FACHHOCHSCHULE GELSENKIRCHEN/ HOCHSCHULE WALLIS , XP002403838 Abbildung 22; Beispiele t27,t32-t34,t37 Anhang 2**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 910 436 B1

## Beschreibung

Die vorliegende Erfindung betrifft besonders feinteilige nichtwässrige Dispersion von Polyurethan(meth)acrylatpartikeln, die sich zur Anwendung als Klebstoff, Gussglas oder Schlagzähmodifikator eignen, und ein Verfahren zur Herstellung solcher Dispersionen.

Nichtwässrige Polyurethandispersionen haben in den vergangenen Jahren eine steigende Bedeutung bekommen. Sie werden vor allem als Beschichtungs-, Haft- und Klebemittel eingesetzt.

Die Schriften DE 3248132, DE 3513248, EP0320690 und EP 0318939 beschreiben nichtwässrige Dispersionen von Polyurethanen zur vorwiegenden Verwendung als Beschichtungsmittel. Das Lösungsmittel besteht aus einem Kohlenwasserstoff. Die Aushärtung geschieht durch Verdunsten des Lösungsmittels, wodurch sich eine dünne Schicht aus den zuvor dispergierten Polyurethanpartikeln bildet. Die Dispersion aus DE 3248132 wird als lichtundurchlässig (opak) beschrieben.

Es existiert jedoch ein Bedürfnis nach Klebesystemen, durch die eine vollständig transparente Klebeverbindung erzielt werden kann. Dies ist insbesondere bedeutsam bei der Verklebung von Gläsern, bei denen die Transparenz auch beim Endprodukt erhalten bleiben soll. Ebenso ist es aber von Wichtigkeit, dass der ausgehärtete Kleber eine Mindestschlagzähigkeit aufweist, um eine mechanisch beanspruchbare Klebeverbindung zu erhalten.

In Anbetracht des Standes der Technik war es Aufgabe der vorliegenden Erfindung, eine Klebstoffformulierung auf Basis einer Polyurethandispersion anzugeben, welche die vorangehend genannten Eigenschaften erfüllt und neben einer hohen Transparenz und nach Härtung auch eine hohe Schlagzähigkeit und Zugscherfestigkeit aufweist.

Eine weitere Aufgabe war die Bereitstellung einer Dispersion die aus relativ wenigen Komponenten erhältlich ist, um die Herstellung wirtschaftlicher zu machen. So sollte auf die Zugabe von Stabilisator so weit wie möglich verzichtet werden, ohne dass dadurch die Stabilität der Dispersion beeinträchtigt wird.

Eine weitere Aufgabe bestand in der Bereitstellung einer Dispersion, die direkt zur Bildung einer Klebeverbindung oder auch eines Gießkörpers ausgehärtet werden kann.

Neben den genannten Eigenschaften sollte es auch ermöglicht werden, dass die Dispersion einen hohen Feststoffanteil an Polyurethan enthält, wodurch die Schlagzähigkeitseigenschaften optimiert werden können. Gleichzeitig sollten eine gute Handhabbarkeit und Verarbeitbarkeit gegeben sein.

Die Herstellung einer erfindungsgemäßen Dispersion sollte mit Komponenten erfolgen, die kommerziell leicht und preisgünstig erhältlich sind.

Die zuvor beschriebenen Aufgaben, sowie weitere, die zwar nicht wortwörtlich genannt werden, sich aber aus den hierin diskutierten Zusammenhängen wie selbstverständlich ableiten lassen oder sich aus diesen zwangsläufig ergeben, werden mit einer Dispersion nach Anspruch 1 gelöst.

In den Unteransprüchen 2 bis 10 sind vorteilhafte Ausführungsformen der Dispersion angegeben. Ein Verfahren zur Herstellung der erfindungsgemäßen Dispersion ist in den Ansprüchen 11 bis 15 angegeben. Die Ansprüche 16 bis 18 beziehen sich auf Verwendungen, für die sich die erfindungsgemäße Dispersion eignet.

Bereitgestellt wird durch die vorliegende Erfindung eine nichtwässrige transparente Dispersion von Polyurethan (meth)acrylatpartikeln in einem Reaktivverdünner, die dadurch erhältlich ist, dass man ein Polyisocyanat mit mindestens einem Polyol und einem nukleophil funktionalisierten (Meth)acrylsäureester in dem Reaktivverdünner umsetzt, und die dadurch gekennzeichnet ist, dass die Polyurethan(meth)acrylatpartikel einen mittleren Durchmesser von weniger als 40 nm aufweisen.

Es wird eine Dispersion eines Schlagzähmodifikators aus Polyurethan(meth)acrylatpartikeln in einem Reaktivverdünner bereitgestellt, die transparent ist und nach Aushärtung des Reaktivverdünners transparent bleibt.

Die erfindungsgemäße Dispersion kann direkt zur Bildung einer Klebeverbindung oder eines Gießkörpers ausgehärtet werden. Außer einem Härtungsinitiator müssen keinerlei weitere Substanzen zugegeben werden. Selbstverständlich ist es aber möglich, die erfindungsgemäße Dispersion mit herkömmlichen Klebesystemen oder Gießmassen zu vermischen und anschließend die Mischung auszuhärten.

Gleichzeitig besitzt die zum Festkörper ausgehärtete Dispersion durch die enthaltenen Polyurethan(meth) acrylatpartikel hervorragende Schlagzähigkeitseigenschaften und hervorragende sonstige mechanische Eigenschaften, insbesondere eine hohe Zugscherfestigkeit.

Vorteilhaft ist weiterhin, dass der erfindungsgemäßen Dispersion keinerlei Stabilisator zur Stabilisierung der Partikel in der flüssigen Phase zugesetzt werden muss.

Wegen der beschriebenen Zugscherfestigkeit und Transparenz eignet sich die Dispersion hervorragend für Klebeanwendungen, bei denen es auf eine hohe Transparenz ankommt. Sie kann z.B. vorteilhaft als Klebstoff für Glas eingesetzt werden.

Durch die Transparenz und die hervorragende Schlagzähigkeit eignet sich die Dispersion auch als Gussmasse zur Herstellung transparenter, schlagzäher Produkte.

Weiterhin ist die beschriebene Dispersion über längere Zeit, d.h. mindestens zwei Monate, bei Raumtemperatur stabil und daher lagerungsfähig.

Gegenüber den bisher vielfach eingesetzten Lösungen von Polyurethan-Schlagzähmodifikatoren in einem Reaktivverdünnungsmittel zeichnet sich die erfindungsgemäße Dispersion dadurch aus, dass in ihr bezogen auf das Gesamtgewicht der Zusammensetzung höhere Feststoffanteile an Polyurethan (nachfolgend: PU) enthalten sein können als bei Lösungen von PU in Reaktivverdünner. Bei letzteren ist der Anteil an PU aufgrund des starken Viskositätsanstiegs stark beschränkt. Somit kann ein hoher Feststoffanteil an PU-Schlagzähmodifikator bei gleichzeitig guter Handhabung bzw. Verarbeitbarkeit erreicht werden.

Im Unterschied zu den eingangs genannten Dispersionen aus dem Stand der Technik ist in der vorliegenden Erfindung der Reaktivverdünner eine für die Herstellung einer Klebeverbindung wichtige Komponente, da er ausgehärtet wird.

Der Begriff "nukleophil funktionalisierter (Meth)acrylsäureester" bedeutet im Rahmen dieser Erfindung einen (Meth)acrylsäureester, der in seinem vom Alkohol herrührenden Rest eine nukleophile funktionale Gruppe trägt, die sich mit freien Isocyanatgruppen umsetzt. Bevorzugte nukleophile Gruppen sind Hydroxy-, Amino- und Mercaptogruppen. Besonders bevorzugt ist eine Hydroxygruppe. Die besonders bevorzugten nukleophil funktionalisierten (Meth) acrylsäureester, mit einer Hydroxyfunktionalität werden als "hydroxyfunktionale (Meth)acrylsäureester" bezeichnet. Eine weitere Beschreibung der nukleophil funktionalisierten (Meth)acrylsäureester wird weiter unten gegeben.

Der Begriff "Polyurethan(meth)acrylat" bedeutet im Rahmen dieser Erfindung ein Polyurethan, dessen freie endständige Isocyanatgruppen mit einem nukleophil funktionalisierten (Meth)acrylsäureester umgesetzt wurden. Dabei reagieren die Isocyanatgruppen mit der nukleophilen Gruppe des nukleophil funktionalisierten (Meth)acrylsäureesters, z.B. Hydroxy-, Amino- oder Mercapto, und es werden endständige, ethylenisch ungesättigte Funktionalitäten gebildet, die von (Meth)acrylaten abgeleitet sind. Der Ausdruck (Meth)acrylsäure bezeichnet hierin Methacrylsäure, Acrylsäure sowie Mischungen dieser Säuren. Weil die nukleophil funktionalisierten (Meth)acrylsäureester mit den freien Isocyanatgruppen des Polyurethans reagieren, diese also "verkappen", werden sie auch als "Capping-Reagenzien" oder "Verkappungsreagenzien" bezeichnet.

Unter dem Begriff "Reaktivverdünner" ist erfindungsgemäß eine Substanz zu verstehen, die mindestens eine ethylenische Doppelbindung enthält. Der Reaktivverdünner erfüllt folgende Funkionen:

1) Der Reaktivverdünner dient als flüssiges Reaktionsmedium für die Reaktion von Polyisocyanat mit mindestens einem Polyol und einem nukleophil funktionalisierten (Meth)acrylsäureester. An der genannten Reaktion nimmt der Reaktivverdünner nicht teil.

2) Der Reaktivverdünner ist nach Abschluss der unter 1) beschriebenen Reaktion das flüssige Dispergiermittel für die gebildeten Polyurethan(meth)acrylatpartikel.

3) Der Reaktivverdünner ist in einem weiteren Schritt durch Polymerisation aushärtbar, wobei am Ende der Reaktion die zuvor gebildeten Polyurethan(meth)acrylatpartikel im ausgehärteten Reaktivverdünner eingebettet sind.

Das nach Abschuss des Schrittes 3) erhaltene Produkt wird im Rahmen dieser Erfindung auch als "ausgehärtete Dispersion" bezeichnet.

Die Einbettung der Polyurethan(meth)acrylatpartikel in der ausgehärteten Dispersion erfolgt durch Einpolymerisation der endständigen, ethylenisch ungesättigte Funktionalitäten der Partikel in die Makromoleküle der polymerisierten Matrix, wobei unter "polymerisierter Matrix" der polymerisierte Reaktivverdünner zu verstehen ist.

Als Reaktivverdünner kommt prinzipiell jede Substanz in Frage, welche die zuvor beschriebenen Funktionen erfüllen kann. Zusätzliche Bedingung ist, dass der Reaktivverdünner sowohl vor als auch nach seiner Aushärtung transparent sein muss.

Zum einen kommen als Reaktivverdünner vinylaromatische Monomere in Betracht. Bevorzugt sind Styrol und substituierte Styrole, wie substituierte Styrole mit einem Alkylsubstituenten in der Seitenkette, wie z.B. $\alpha$-Methylstyrol und $\alpha$-Ethylstyrol, substituierte Styrole mit einem Alkylsubstituenten am Ring, wie beispielsweise Vinyltoluol, halogenierte Styrole, wie beispielsweise Monochlorstyrole, Dichlorstyrole, Tribromstyrole und Tetrabromstyrole.

Am meisten bevorzugte Reaktivverdünner sind (Meth)acrylate. Hierunter sollen im Rahmen der Erfindung sowohl Methacrylate als auch Acrylate verstanden werden. Die (Meth)acrylate können eine oder mehrere Doppelbindungen aufweisen. (Meth)acrylate, die zwei oder mehr reaktive Doppelbindungen aufweisen, werden im Rahmen der Erfindung als mehrwertige (Meth)acrylate bezeichnet.

Der vom Alkohol herrührende Rest der (Meth)acrylate kann Heteroatome enthalten, beispielsweise in Form von Ether-, Alkohole-, Carbonsäure-, Ester- und Urethangruppen.

Zu im Rahmen der Erfindung mit besonderem Erfolg als Reaktivverdünner einsetzbaren (Meth)acrylaten gehören u. a.:

Alkyl(meth)acrylate, die sich von gesättigten Alkoholen ableiten, wie Methyl(meth)acrylat,

Ethyl(meth)acrylat, Isopropyl(meth)acrylat, n-Propyl(meth)acrylat, Butyl(meth)acrylat, Pentyl(meth)acrylat, n-Hexyl(meth)acrylat, n-Octyl(meth)acrylat, n-Decyl(meth)acrylat, Isooctyl(meth)acrylat, Tetradecyl(meth)acrylat usw.;
Alkyl(meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat usw.;
Amide und Nitrile der (Meth)acrylsäure, wie
N-(3-Dimethylaminopropyl)(meth)acrylamid,
N-(Diethylphosphono)(meth)acrylamid,
N-(3-Dibutylaminopropyl)(meth)acrylamid,
N-t-Butyl-N-(diethylphosphono)(meth)acrylamid,
N,N-bis(2-Diethylaminoethyl)(meth)acrylamid,
(Meth)acryloylamidoacetonitril,
N-(Methoxymethyl)(meth)acrylamid,
N-Acetyl(meth)acrylamid,
N-(Dimethylaminoethyl)(meth)acrylamid,
N-Methyl-N-phenyl(meth)acrylamid,
N,N-Diethyl(meth)acrylamid,
N-Methyl(meth)acrylamid,
N,N-Dimethyl(meth)acrylamid,
N-Isopropyl(meth)acrylamid;
Aminoalkyl(meth)acrylate, wie
tris(2-(Meth)acryloxyethyl)amin,
N-methylformamidoethyl(meth)aerylat,
3-Diethylaminopropyl(meth)acrylat,
2-Ureidoethyl(meth)acrylat;
andere stickstoffhaltige (Meth)acrylate, wie
N-((Meth)acryloyloxyethyl)düsobutylketimin,
2-(Meth)acryloyloxyethylmethylcyanamid,
Cyanomethyl(meth)acrylat,
2,2,6,6-Tetramethylpiperidyl(meth)acrylat;
Aryl(meth)acrylate, wie
Nonylphenyl(meth)acrylat,
Benzyl(meth)acrylat,
2-Naphthyl(meth)acrylat,
Phenyl(meth)acrylat, wobei die Arylreste jeweils unsubstituiert oder bis zu vierfach substituiert sein können;
carbonylhaltige (Meth)acrylate, wie
2-Carboxyethyl(meth)acrylat,
Carboxymethyl(meth)acrylat,
N-(2-(Meth)acryloyloxyethyl)-2-pyrrolidinon,
N-(3-(Meth)acryloyloxypropyl)-2-pyrrolidinon,
N-(Meth)acryloylmorpholin,
Oxazolidinylethyl(meth)acrylat,
N-((Meth)acryloyloxy)formamid,
Acetonyl(meth)acrylat,
N-(Meth)acryloyl-2-pyrrolidinon;
Cycloalkyl(meth)acrylate, wie
Cyclobutyl(meth)acrylat,
Cyclopentyl(meth)acrylat,
Cyclohexyl(meth)acrylat,
Cyclooctyl(meth)acrylat,
3-Vinylcyclohexyl(meth)acrylat,
3,3,5-Trimethylcyclohexyl(meth)acrylat,
Bornyl(meth)acrylat,
Cyclopenta-2,4-dienyl(meth)acrylat,
Isobornyl(meth)acrylat,
1-Methylcyclohexyl(meth)acrylat;
Glycoldi(meth)acrylate, wie
1,4-Butandioldi(meth)acrylat,

1,3-Butandioldi(meth)acrylat,
Triethylenglycoldi(meth)acrylat,
2,5-Dimethyl- 1,6-hexandioldi(meth)acrylat,
1,10-Decandioldi(meth)acrylat,
1,2-Propandioldi(meth)acrylat,
Diethylenglycoldi(meth)acrylat,
Ethylenglycoldi(meth)acrylat;
(Meth)acrylate von Etheralkoholen, wie
Tetrahydrofurfuryl(meth)acrylat,
Vinyloxyethoxyethyl(meth)acrylat,
Methoxyethoxyethyl(meth)acrylat,
I -Butoxypropyl(meth)acrylat,
I -Methyl-(2-vinyloxy)ethyl(meth)acrylat,
Cyclohexyloxymethyl(meth)acrytat,
Methoxymethoxyethyl(meth)acrylat,
Benzyloxymethyl(meth)acrylat,
Phenyloxyethylmethacrylat
Furfuryl(meth)acrylat,
2-Butoxyethyl(meth)acrylat,
2-Ethoxyethoxymethyl(meth)acrylat,
2-Ethoxyethyl(meth)acrylat,
Allyloxymethyl(meth)acrylat,
1-Ethoxybutyl(meth)acrylat,
Methoxymethyl(meth)acrylat,
1 -Ethoxyethyl(meth)acrylat,
Ethoxymethyl(meth)acrylat;
(Meth)acrylate von halogenierten Alkoholen, wie
2,3-Dibromopropyl(meth)acrylat,
4-Bromophenyl(meth)acrylat,
1,3-Dichloro-2-propyl(meth)acrylat,
2-Bromoethyl(meth)acrylat,
2-lodoethyl(meth)acrylat,
Chloromethyl(meth)acrylat;
Oxiranyl(meth)acrylate, wie
10,11-Epoxyundecyl(meth)acrylat,
2,3-Epoxycyclohexyl(meth)acrylat,
2,3-Epoxybutyl(meth)acrylat,
3,4-Epoxybutyl(meth)acrylat,
Glycidyl(meth)acrylat;
Phosphor-, Bor- und/oder Silicium-haltige (Meth)acrylate, wie
2-(Dibutylphosphono)ethyl(meth)acrylat,
2,3-Butylen(meth)acrylolethylborat,
2-(Dimethylphosphato)propyl(meth)acrylat,
Methyldiethoxy(meth)acryloylethoxysilan,
2-(Ethylenphosphito)propyl(meth)acrylat,
Dimethylphosphinomethyl(meth)acrylat,
Dimethylphosphonoethyl(meth)acrylat,
Diethyl(meth)acryloylphosphonat,
Diethylphosphatoethyl(meth)acrylat,
Dipropyl(meth)acryloylphosphat;
schwefelhaltige (Meth)acrylate, wie
Thiomethyl(meth)acrylat,
Thiocyclohexyl(meth)acrylat,
Thiophenyl(meth)acrylat,
Ethylsulfinylethyl(meth)acrylat,
4-Thiocyanatobutyl(meth)acrylat,
Ethylsulfonylethyl(meth)acrylat,
Thiocyanatomethyl(meth)acrylat,

Methylsulfinylmethyl(meth)acrylat,
Bis((meth)acryloyloxyethyl)sulfid;
Tri(meth)acrylate, wie
Trimethyloylpropantri(meth)acrylat,
Glycerintri(meth)acrylat;
Tetra(meth)acrylate, wie
Pentaerythrittetra(meth)acrylat.

Die genannten Verbindungen kommen allein oder in Mischungen von zwei oder mehreren als Reaktivverdünner eingesetzt werden.

Zu besonders bevorzugten Reaktivverdünnerkomponenten gehören im Rahmen der Erfindung u. a. Alkyl(meth)acrylate, die sich von gesättigten Alkoholen ableiten, wie Methyl(meth)acrylat, Ethyl(meth)acrylat, Isopropyl(meth)acrylat, n-Propyl(meth)acrylat, Butyl(meth)acrylat, Pentyl(meth)acrylat, n-Hexyl(meth)acrylat, n-Octyl(meth)acrylat, n-Decyl(meth)acrylat, Isooctyl(meth)acrylat, Tetradecyl(meth)acrylat usw., Allylacrylat, Phenyloxyethylmethacrylat, Allyl(meth)acrylat, Glycidyl(meth)acrylat, Neopentyl(meth)acrylat, Isobornyl(meth)acrylat, Cyclohexyl(meth)acrylat, tert.-Butyl(meth)acrylat, Tetrahydrofurfuryl(meth)acrylat, Maleinsäure-mono-2-(meth)acryloyloxyethylester, (7,7,9-Trimethyl-4,13-dioxo-3,14-dioxa-12-diazahexandecan-1,16-dioldi(meth)acrylat), 3-[2-((Meth)acryloyloxy)ethoxycarbonyl]-propionsäure oder Gemische davon.

Am meisten bevorzugt als Reaktivverdünner sind Methylmethacrylat (MMA) und 2-Phenyloxyethylmethacrylat, (POEMA).

Polare Monomere, beispielsweise solche mit Hydroxylgruppen, können zur Verbesserung der Haftung eingesetzt werden. Dabei muss aber berücksichtigt werden, dass solche Monomere, die mit Isocyanaten Reaktionen eingehen, beispielsweise hydroxylgruppenhaltige, erst nach dem Polyadditionsschritt der Dispersion zugefügt werden können. Zweckmäßig begrenzt man jedoch die Menge solch polarer Monomere, um die Empfindlichkeit gegenüber Wasserquellung nicht unnötig zu steigern. Besonders bevorzugt werden polare, insbesondere Hydroxylgruppen-haltige Monomere auf eine Menge von 0, 1 bis 20 Gew.-% - bezogen auf das Gesamtgewicht des Reaktivverdünners -beschränkt.

Außerdem können in dem Reaktivverdünner auch Methacrylate vorhanden sein, die als Vernetzungsmittel fungieren. Hierzu zählen unter anderem Di-, tri- und mehrfachfunktionelle Verbindungen. Besonderen Vorzug genießen difunktionelle (Meth)acrylate sowie trifunktionelle (Meth)acrylate.

(a) Difunktionelle (Meth)acrylate
Verbindungen der allgemeinen Formel:

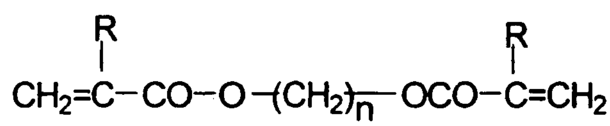

worin R Wasserstoff oder Methyl ist und n eine positive ganze Zahl zwischen 3 und 20, wie z.B. das Di(meth)acrylat des Propandiols, Butandiols, Hexandiols, Octandiols, Nonandiols, Decandiols und Eicosandiols, Verbindungen der allegemeinen Formel:

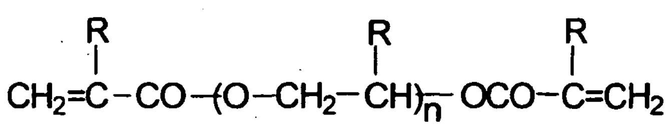

worin R Wasserstoff oder Methyl ist und n eine positive ganze Zahl zwischen 1 und 14, wie z.B. das Di(meth)acrylat des Ethylenglycols, Diethylenglycols, Triethylenglycols, Tetraethylenglycols, Dodecaethylenglycols, Tetradecaethylenglycols, Propylenglycols, Dipropylenglycols und Tetradecapropylenglycols; und Glycerindi(meth)acrylat, 2,2'-Bis[p-(γ-methacryloxy-β-hydroxypropoxy)-phenylpropan] oder Bis-GMA, Bisphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2-hydroxypropoxy)butan.
(b) Tri- oder mehrfachfunktionelle (Meth)acrylate
Trimethylolpropantri(meth)acrylate und Pentaerythritoltetra(meth)acrylat.

Die genannten vernetzend wirkenden Monomeren werden entweder allein oder in Form einer Mischung von mehreren Monomeren verwendet.

Weitere mehrfunktionelle (Meth)acrylate, die im Reaktivverdünner vorhanden sein können, sind 2,2-Bis-4(3-methacryloxy-2-hydroxypropoxy)-phenylpropan (Bis-GMA) und/oder 7,7,9-Trimethyl-4,13-dioxo-3,14-dioxa-5,12-diaza-hexadecan-1,16-dioxy-dimethacrylat (UDMA) sowie Diacryl 121 (AKZO) und ähnliche Produkte, z. B. der allgemeinen Formel

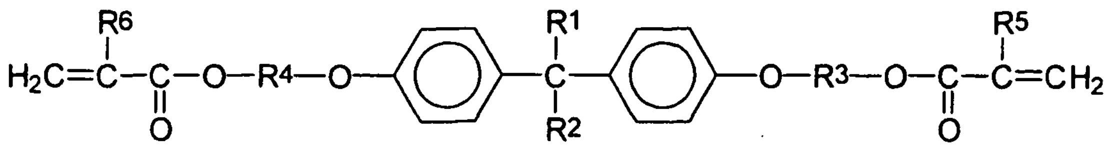

$R^1$, $R^2$ = H, Alkyl (bevorzugt H, $CH_3$)
$R^3$, $R^4$ = Alkyl oder

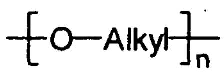

z. B.

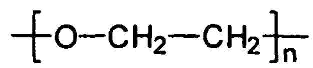

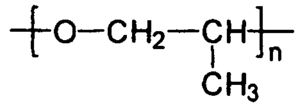

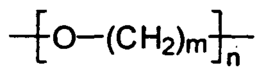

mit n = 1 bis 00 und m = 1,2 oder 3.

Der Anteil der mehrwertigen (Meth)acrylate ist unter Berücksichtigung der obigen Angaben im Prinzip unbeschränkt. Es wurde jedoch festgestellt, daß deren Anteil vorzugsweise auf 40 Gew.-%, bezogen auf das Gewicht des Reaktivverdünners, beschränkt werden sollte, da andernfalls mechanische Eigenschaften oder das Polymerisationsverhalten nachteilig beeinflußt werden können.

Ein Reaktivverdünner auf Basis von (Meth)acrylaten kann des weiteren auch andere Comonomere enthalten, die mit oben genannten (Meth)acrylaten copolymerisierbar sind. Zu diesen gehören u.a. Vinylester, Vinylchlorid, Vinylidenchlorid, Vinylacetat, Styrol, substituierte Styrole mit einem Alkylsubstituenten in der Seitenkette, wie z.B. $\alpha$-Methylstyrol und $\alpha$-Ethylstyrol, substituierte Styrole mit einem Alkylsubstituenten am Ring, wie beispielsweise Vinyltoluol und p-Methylstyrol, halogenierte Styrole, wie beispielsweise Monochlorstyrote, Dichlorstyrole, Tribromstyrole und Tetrabromstyrole, Vinyl-und Isopropenylether, Maleinsäurederivate, wie beispielsweise Maleinsäureanhydrid, Methylmaleinsäureanhydrid, Maleinimid, Methylmaleinimid, Phenylmaleinimid und Cyclohexylmaleinimid, und Diene, wie beispielsweise 1,3-Butadien, Divinylbenzol, Diallylphthalat und 1,4-Butandioldivinylether.

Der Anteil der Comonomere ist auf 40 Gew.-% des Reaktivverdünners beschränkt, da andernfalls die mechanischen Eigenschaften der gehärteten Dispersion nachteilig beeinflusst werden können. Der Anteil der Vinylaromaten ist hierbei auf 30 Gew.-% des Reaktivverdünners begrenzt, da höhere Anteile zu einer Entmischung des Systems und somit zu einer Trübung führen können.

Alle oben genannten Monomere sind kommerziell erhältlich.

Der Reaktivverdünner ist dementsprechend besonders bevorzugt aus

a1) 60 bis 100 Gew.-Teilen (Meth)acrylat

a2) 0 bis 40 Gew.-Teilen mehrwertiges (Meth)acrylat

a3) 0 bis 40 Gew.-Teilen Comonomer

aufgebaut.

Polyisocyanate bezeichnen im Rahmen der vorliegenden Erfindung niedermolekulare Verb., die im Molekül zwei oder mehrere Isocyanat-Gruppen enthalten. Bevorzugt werden in der vorliegenden Erfindung Diisocyanate eingesetzt.

In bestimmten Ausführungsformen können jedoch zusätzlich auch Polyisocyanate mit drei oder mehr Isocyanat-Gruppen zugegeben werden. Durch Wahl des Anteils an Polyisocyanaten mit 3 oder mehr isocyanat-Gruppen lässt sich das Eigenschaftsspektrum von Reißdehnung und Reißfestigkeit einstellen. Je höher der Anteil an Verbindungen mit drei oder mehr Funktionalitäten ist, desto größer wird die Reißfestigkeit. Hierbei nimmt allerdings die Reißdehnung stark ab. Dementsprechend wurde festgestellt, dass der Anteil dieser Polyisocyanate mit drei oder mehr Funktionalitäten nicht größer als 10 Gew.-%, bevorzugt nicht mehr als 5 Gew.-%, bezogen auf die Gesamtmasse an Polyisocyanaten, sein sollte.

Zu den in der vorliegenden Erfindung verwendbaren Polyisocyanaten gehören unter anderem 2,4-Toluoldiisocyanat, 2,6-Toluoldiisocyanat, 4,4'-Diphenylmethandiisocyanat (4,4'-Methylendiphenyldiisocyanat, MDI), 4,4'-Dicyclohexyldiisocyanat, 2,4'-Methylendicyclohexyldiisocyanat, 4,4'-Methylendicyclohexyldiisocyanat, meta- und para-Tetramethyl-xylendiisocyanat, 3-Isocyanatomethyl-3,5,5-trimethylcyclohexylisocyanat (Isophorondiisocyanat), Hexamethylendiisocyanat, 1,5-Naphthylendiisocyanat, Dianisidindiisocyanat, Di(2-isocyanatoethyl)-bicyclo[2.2.1]-hept-5-en-2,3-dicarboxylat, 2,2,4-und 2,4,4-Trimethylenhexamethylendiisocyanat, Triphenylmethan-4,4',4"-triisocyanat, Tris-(4-isocyanatophenyl)-thiophosphat, und Mischungen davon.

Geeignete Polyisocyanate können beispielsweise auch durch die Umsetzung von mehrwertigen Alkoholen mit Diisocyanaten oder durch die Polymerisation von Diisocyanaten erhalten werden. Des Weiteren sind auch Polyisocyanate einsetzbar, die durch Umsetzung von Hexamethylendiisocyanat mit geringen Mengen an Wasser darstellbar sind. Diese Produkte enthalten Biuret-Gruppen.

Diese Verbindungen sind in der Fachwelt weithin bekannt und zum größten Teil kommerziell erhältlich. Hierzu gehören unter anderem ®Desmodur H, ®Desmodur T, ®Desmodur N 100, ®Desmodur N 3300, ®Desmodur CD (BAYER), ®Basonat PLR 8401, ®Basonat PLR 8638 (BASF), ®Tolonate HDB 75 MX, ®Tolonate HDT 90 (Rhône Poulenc), ®Vestanat IPDI, ®Vestanat T 1890/100 ®Vestanat H12-MDI, ®Vestanat TMDI und ®Vestanat T 2960 (Hüls).

Dispersionen mit besonders vorteilhaften Eigenschaften, wie eingangs beschrieben, erhält man, wenn Polyisocyanate mit aliphatischer und/oder cycloaliphatischer Struktur eingesetzt werden, die keine armomatischen Bestandteile besitzen. Genannt seien Isophorondiisocyanat, 2,4'-Methylendicyclohexyldiisocyanat, 4,4'-Methylendicyclohexyldiisocyanat, 2,2,4- und 2,4,4-Trimethylenhexamethylendiisocyanat, wobei Isophorondiisocyanat am meisten bevorzugt ist.

Als Polyisocyanate eigen sich im Rahmen der vorliegenden Erfindung auch die analogen Isothiocyanate. Da diese allerdings schlechter kommerziell erhältlich sind, sind diese Verbindungen weniger bevorzugt.

Alle genannten Isocyanate können sowohl einzeln als auch als Mischung eingesetzt werden.

Wie in Anspruch 1 ausgeführt, wird das Isocyanat mit mindestens einem Polyol umgesetzt. Unter einem Polyol versteht man im Rahmen der vorliegenden Erfindung eine Verbindung mit mindestens zwei Hydroxyfunktionalitäten. Das Polyol kann ein einheitliches Molekulargewicht besitzen oder eine statistische Verteilung des Molekulargewichts.

Das Polyol ist bevorzugt ein hochmolekulargewichtiges Polyol mit statistischer Molmassenverteilung. In diesem Sinne ist unter einem "hochmolekulargewichtigen Polyol" im Rahmen der vorliegenden Erfindung ein Polyol mit zwei oder mehreren Hydroxygruppen zu verstehen, wobei das Gewichtsmittel des Molekulargewichts des hochmolekulargewichtigen Polyols im Bereich von >500 bis etwa 20.000 g/mol liegt. Bevorzugt liegt es im Bereich von >500 bis 15.000 g/mol, zweckmäßig im Bereich von >500 bis 10.000 g/mol und ganz besonders bevorzugt im Bereich von >500 bis 5.000 g/mol, gemessen mit Gelpermeationschromatographie.

Beispielhaft für hochmolekulargewichtige Polyole sind die Polyetherpolyole. Beispiel von Polyetherpolyolen sind Polyalkylenetherpolyole der Strukturformel

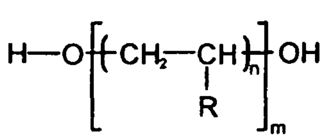

worin der Substituent R Wasserstoff oder eine niedere Alkylgruppe mit 1-5 Kohlenstoffatomen bedeutet, einschließlich gemischte Substituenten, und n typischerweise 2-6 ist und m 2 bis 100 oder auch höher beträgt. Umfasst sind die Poly (oxytetramethylen)glykole (= Polytetramethylenetherglykol = Polytetrahydrofuran), Poly(oxyethylen)glykole, Poly(oxy-1,2-propylen)glykole und die Reaktionsprodukte von Ethylenglykol mit einer Mischung von 1,2-Propylenoxid, Ethylenoxid and Alkylglycidylethern.

Ein besonders bevorzugtes Polyol ist Polytetrahydrofuran. Es ist beispielsweise von der Firma BASF unter

den Handelsnamen ®PTHF 650 oder ®PTHF 2000 erhältlich.

Ebenso einsetzbar sind Polyetherpolyole, die aus der Oxyalkylierung verschiedener Polyole erhalten werden, wie z.B. von Glykolen, wie Ethylenglykol, 1,6, Hexandiol, Bisphenol-A u.a.

Polyetherpolyole, die mindestens drei Hydroxyfunktionalitäten aufweisen, können ebenfalls eingesetzt werden.

Um mindestens drei Hydroxyfunktionalitäten zu erhalten, die mit Isocyanatgruppen reagieren können, können beispielsweise Alkohole als Startmoleküle eingesetzt werden, die mindestens drei Hydroxygruppen aufweisen. Hierzu gehören unter anderem Glycerin, Trimethylolpropan, Erythrit, Pentaerythrit, Sorbit und Inosit, von diesen ist Glycerin bevorzugt.

Die o.g. Alkohole mit mindestens drei Hydroxygruppen können beispielsweise durch Polyaddition von cyclischen Ethern, wie beispielsweise Oxiranen sowie Tetrahydrofuran, umgesetzt werden. Zu den Oxiranen, die zur Polyaddition verwendet werden können, gehören unter anderem die zuvor genannten. Von diesen sind Ethylenoxid und Propylenoxid bevorzugt.

Die Polyaddition von cyclischen Ethern an mehrwertige Alkohole ist in der Fachwelt weithin bekannt. Wertvolle Hinweise findet der Fachmann beispielsweise in Ullmann's Encyclopedia of Industrial Chemistry, 5. Aufl., Stichwort "Polyoxyalkylenes".

Ein bevorzugtes trifunktionelles Polyol ist ein trifunktionelles Polypropylenetherpolyol aus Propylenoxid, Ethylenoxid und Glycerin. Ein solches Polyol wird unter dem Namen ®Baycoll BT 5035 von der Firma Bayer vertrieben.

Des Weiteren können Polyoxyalkylene, die drei oder mehr Hydroxyfunktionalitäten aufweisen, auch in situ hergestellt werden, indem Polyoxyalkylene mit zwei Hydroxyfunktionalitäten durch Polyisocyanate mit drei oder mehr Isocyanatgruppen verknüpft werden.

Ebenfalls als hochmolekulargewichtige Polyole können mittelmolekulare Copolyesterdiole, lineare Copolyester mit endständigen primären Hydroxylgruppen, eingesetzt werden. Ihr gewichtsmittleres Molekulargewicht liegt vorzugsweise bei 3000 - 5000 g/mol. Sie sind erhältlich durch Veresterung einer organischen Polycarbonsäure oder eines Derivats davon mit organischen Polyolen und/oder einem Epoxid. Im allgemeinen sind die Polycarbonsäuren und Polyole aliphatische oder aromatische dibasische Säuren und Diole.

Als Diol in dem Copolyesterdiol werden vorzugsweise Alkylenglykole, wie Ethylenglykol, Neopentylglykol, oder auch Glykole wie Bisphenol A, Cyclohexandiol, Cyclohexandimethanol, von Caprolacton abgeleitete Diole, z.B. das Reaktionsprodukt of epsilon-Caprolacton and Ethylenglykol, Hydroxy-alkylierte Bisphenole, Polyetherglykole, wie Poly (oxytetramethylen)glykol und derartige eingesetzt. Polyole höherer Funktionalität können ebenso eingesetzt werden. Sie umfassen beispielsweise Trimethylolpropan, Trimethylolethan, Pentaerythrit, und auch höhermolekulargewichtige Polyole, wie diejenigen, die durch Oxyalkylierung niedermolekularer Polyole hergestellt sind.

Als Säurekomponente in dem Copolyesterdiol werden vorzugsweise monomere Carbonsäuren oder -anhydride mit 2 bis 36 Kohlenstoffatomen pro Molekül eingesetzt. Einsetzbare Säuren sind z.B. Phthalsäure, Isophthalsäure, Terephthalsäure, Tetrahydrophthalsäure, Decandisäure, Dodecandisäure. Die Polyester können geringe Mengen monobasischer Säuren enthalten, wie z.B. Benzoesäure, Stearinsäure, Essigsäure und Ölsäure. Ebenso einsetzbar sind höhere Polycarbonsäuren, wie Trimellithsäure.

Erfindungsgemäß bevorzugte mittellange Copolyesferdiole werden von der Firma Degussa unter dem Markennamen DYNACOLL® 7380 und DYNACOLL® 7390 vertrieben.

Eine weitere Klasse von hochmolekulargewichtigen Polyolen, die erfindungsgemäß eingesetzt werden können, sind die Polyester vom Lacton-Typ. Diese sind gebildet durch die Reaktion zwischen einem Lacton, wie z.B. epsilon-Caprolacton, und einem Polyol. Das Produkt eines Lactons mit einem säurehaltigen Polyol kann ebenso eingesetzt werden.

Ebenfalls eingesetzt werden kann ein hochmolekulargewichtiges Polyol, das von Poly(meth)acrylaten abgeleitet ist. Eine solche Verbindung ist z.B. Poly-n-butylmethacrylat-diol, das unter dem Namen ®BD 1000 von der Firma Goldschmidt erhältlich ist.

Dispersionen mit besonders vorteilhaften Eigenschaften, insbesondere mit einer hervorragenden Schlagzähigkeit, erhält man, wenn als Polyol ein Polybutadiendiol mit Hydroxy-Endgruppen eingesetzt wird. Die gewichtsmittleren Molekulargewichte solch bevorzugter Polybutadiendiole liegen vorzugsweise im Bereich von 2000 bis 5000 g/mol.

Solche Polybutadiendiole sind erhältlich unter den Handelsnamen ®KRASOL LBH 2000, ®KRESOL LBH 3000 und ®KRASOL LBH 5000, vertrieben von der Firma Sartomer (ehemals Kauchuk, CZ)

Grundsätzlich können ein oder mehrere hochmolekulargewichtige Polyole, von denen Beispiele zuvor angegeben sind, eingesetzt werden. Bevorzugt ist in der vorliegenden Erfindung das hochmolekulargewichtige Polyol ein Diol.

In einer besonders bevorzugten Ausführungsform wird der Reaktionsmischung zur Bildung der Polyurethan (meth)acrylatpartikel zusätzlich zu einem hochmolekulargewichtigen Polyol auch ein niedermolekulargewichtiges Polyol zugesetzt. Demgemäß sind in einer hoch bevorzugten Ausführungsform Polyurethan(meth)acrylatpartikel dadurch erhältlich, dass man ein Polyisocyanat mit einem hochmolekulargewichtigen Polyol, einem niedermolekulargewichtigen Polyol und einem Hydroxyalkyl(meth)acrylsäureester in dem Reaktivverdünner umsetzt.

Unter einem "niedermolekulargewichtigen Polyol" versteht man erfindungsgemäß eine Verbindung, die zwei

oder mehr Hydroxyfunktionalitäten und eine Molmasse von 50- 500 g/mol und vorzugsweise 50 - 250 g/mol besitzt. Das Molekulargewicht kann einheitlich sein, oder es kann - im Falle eines Polymerisationsprodukts - statistisch verteilt sein, wobei in letzterem Fall unter dem Molekulargewicht das Gewichtsmittel des Molekulargewichts zu verstehen ist.

Bevorzugt als niedermolekulargewichtiges Polyol ist eines mit einheitlichem Molekulargewicht, wobei die aliphatischen Diole mit 2 bis 18 Kohlenstoffatomen, wie z.B. Ethylenglykol, 1,2-Propandiol, 1,3 Propandiol, 1,2-Butandiol, 1,4 Butandiol, 1,2-Hexandiol und 1,6-Hexandiol, und die cycloaliphatischen Polyole, wie 1,2-Cyciohexandiol und Cyclohexandimethanol besonders bevorzugt sind. Ebenso einsetzbar sind die Polyole mit Ethergruppen, wie Diethylenglykol und Triethylenglykol und Dipropylenglykol. Beispielhaft für niedermolekulargewichtige Polyole mit mehr als zwei Hydroxygruppen sind Trimethylolmethan, Trimethylolethan, Trimethylopropan, Glycerin und Pentaerythrit. Am meisten bevorzugt werden als niedermolekulargewichtiges Polyol 1,4 Butandiol und 1,3 Propandiol eingesetzt.

Es ist auch möglich, niedermolekulargewichtige Polyole mit einer statistischen Verteilung des Molekulargewichts einzusetzen. Als niedermolekulargewichtiges Polyol mit statistischer Molekulargewichtsverteilung kann prinzipiell jedes Polyol eingesetzt werden, das aus den gleichen monomeren Einheiten aufgebaut ist wie die zuvor beschriebenen hochmolekulargewichtigen Polyole, jedoch ein entsprechend geringeres Molekulargewicht, wie oben angegeben, besitzt. Dem Fachmann ist offensichtlich, dass das Gewichtsmittel des Molekulargewichts im Fall eines niedermolekulargewichtigen Polyols mit statistischer Molmassenverteilung vorwiegend in der Nähe der Obergrenze des zuvor definierten Bereichs von 50 - 500 g/mol liegen wird.

Besonders bevorzugte nukleophil funktionalisierte (Meth)acrylsäureester sind hydroxyfunktionale (Meth)acrylsäureester. Unter einem "hydroxyfunktionalen (Meth)acrylsäureester" ist erfindungsgemäß ein (Meth)acrylsäureester zu verstehen, der in dem vom Alkohol herrührenden Rest nach der Veresterung mit der (Meth)acrylsäure noch mindestens eine Hydroxyfunktionalität trägt. Anders gesagt, handelt es sich um den Ester aus einer (Meth)acrylsäure und einem Diol oder Polyol, wobei die Diole bevorzugt sind.

Eine besonders bevorzugte Gruppe der "hydroxyfunktionalen (Meth)acrylsäureester" sind die Hydroxyalkyl (meth)acrylsäureester. Erfindungsgemäß einsetzbare Hydroxyalkyl(meth)acrylsäureester sind Ester der (Meth)acrylsäure mit zweiwertigen, aliphatischen Alkoholen. Diese Verbindungen sind in der Fachwelt weithin bekannt. Sie können beispielsweise durch die Reaktion von (Meth)acrylsäure mit Oxiranen erhalten werden.

Zu den Oxiranverbindungen gehören unter anderem Ethylenoxid, Propylenoxid, 1,2-Butylenoxid und/oder 2,3-Butylenoxid, Cyclohexenoxid, Styroloxid, Epichlorhydrin und Glycidylester. Diese Verbindungen können sowohl einzeln als auch als Mischung verwendet werden. Die Umsetzung zu den Hydroxyalkyl(meth)acrylsäureestern ist beispielsweise in DE-A-24 39 352, DE-15 68 838 und GB 1 308 250 beschrieben.

Die so erhältlichen Hydroxyalkyl(meth)acrylsäureester sind häufig kommerziell erhältlich und daher für die erfindungsgemäßen Zwecke besonders geeignet.

Die Hydroxyalkyl(meth)acrylsäureester können auch Substituenten, wie beispielsweise Phenylreste oder Aminogruppen, enthalten.

Bevorzugte Hydroxyalkyl(meth)acrylsäureester sind unter anderem 1-Hydroxyethylacrylat, 1-Hydroxyethylmethacrylat, 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 6-Hydroxyhexyfacrylat und 6-Hydroxyhexylmethacrylat, 3-Phenoxy-2-hydroxypropylmethacrylat, Acrylsäure-(4-hydroxybutylester), Methacrylsäure-(hydroxymethylamid), Caprolactonhydroxyethylmethacrylat und Caprolactonhydroxyethylacrylat. Hiervon sind die Hydroxyethylmethacrylate, die Hydroxyethylacrylate, 2-Hydroxypropylmethacrylat und 2-Hydroxypropylacrylat ganz besonders bevorzugt. Am meisten bevorzugt ist 2-Hydroxyethylmethacrylat.

Eine weitere bevorzugte Gruppe der hydroxyfunktionalen (Meth)acrylsäureester sind die Polyethermethacrylate. Hierunter sind Substanzen zu verstehen, die durch Veresterung einer (Meth)acrylsäure mit einem Polyetherpolyol, vorzugsweise einem Polyetherdiol, erhalten sind. Solche Polyetherpolyole wurden bereits weiter oben bei der Nennung bevorzugter Polyole aufgeführt. Bei der Polyethermethacrylaten enthält der Hydroxyalkylrest des Esters Polyoxyalkylengruppen, die sowohl linear als auch verzweigt sein können, wie beispielsweise Polyethylenoxid, Polypropylenoxid und Polytetramethylenoxid. Diese Gruppen weisen häufig zwischen 2 und 10 Oxyalkylen-Einheiten auf. Spezielle Beispiele sind Polyethoxymethacrylat, Polypropoxymethacrylat, Polyethylenoxid/Polytetramethylenoxidmethacrylat, Polyethylenoxid/Polypropylenoxidmethacrylat.

Prinzipiell kann jedes der weiter oben genannten Polyole (hochmolekulargewichtige wie auch niedermolekulargewichtige) zur Bildung eines erfindungsgemäßen hydroxyfunktionalen (Meth)acrylsäureesters eingesetzt werden, wobei die Diole ganz besonders bevorzugt sind.

In einer weiteren vorteilhaften Ausführungsform ist als nukleophil funktionalisierter (Meth)acrylsäureester ein aminofunktionaler (Meth)acrylsäureester als Verkappungsmittel einsetzbar. Unter einem "aminofunktionalen (Meth) acrylsäureester" ist erfindungsgemäß ein (Meth)acrylsäureester zu verstehen, der in dem vom Alkohol herrührenden Rest nach der Veresterung mit der (Meth)acrylsäure noch mindestens eine Aminofunktionalität trägt. Bevorzugte Hydroxyalkyl(meth)acrylsäureester sind unter anderem 1-Aminoethylacrylat, 1-Aminoethylmethacrylat, 2-Aminoethylacrylat, 2-Aminoethylmethacrylat, 2-Aminopropylacrylat, 2-Aminopropylmethacrylat, 3-Aminopropylacrylat, 3-Aminopropylmethacrylat, 6-Aminohexylacrylat und 6-Aminohexylmethacrylat, 3-Phenoxy-2-Aminopropylinethacrylat, Acrylsäure-(4-Aminobutylester). Hiervon sind 1- Aminoethylmethacrylat, 2-Aminoethylmethacrylat, 1-Aminoethylacrylat, 2-Aminoethylacrylat, 2-Aminopropylmethacrylat und 2-Aminopropylacrylat ganz besonders bevorzugt. Am meisten bevorzugt ist 2-Aminoethylmethacrylat. In Erwägung gezogen werden können auch aminofunktionale (Meth)acrylsäureester, die am Stickstoff einen Kohlenwasserstoffrest, wie z.B. Methyl, Ethyl, Propyl, Isopropyl, tragen. Beispiele sind 2-(N-Methyl)-aminoethylmethacrylat, 2-(N-Methyl)-aminoethylacrylat, 2-(N-Methyl)aminopropylmethacrylat und 2-(N-Methyl)aminopropylacrylat.

In noch einer weiteren vorteilhaften Ausführungsform ist als nukleophil funktionalisierter (Meth)acrylsäureester ein mercaptofunktionaler (Meth)acrylsäureester als Verkappungsmittel einsetzbar. Unter einem "mercaptofunktionalen (Meth)acrylsäureester" ist erfindungsgemäß ein (Meth)acrylsäureester zu verstehen, der in dem vom Alkohol herrührenden Rest nach der Veresterung mit der (Meth)acrylsäure noch mindestens eine Mercaptofunktionalität trägt. Bevorzugte Mercaptoalkyl(meth)acrylsäureester sind unter anderem 1-Mercaptoethylacrylat, 1-Mercaptoethylmethacrylat, 2-Mercaptoethylacrylat, 2-Mercaptoethylmethacrylat, 2-Mercaptopropylacrylat, 2-Mercaptopropylmethacrylat, 3-Mercaptopropylacrylat, 3-Mercaptopropylmethacrylat, 6-Mercaptohexylacrylat und 6-Mercaptohexylmethacrylat, 3-Phenoxy-2-Mercaptopropylmethacrylat, Acrylsäure-(4-Mercaptobutylester). Hiervon sind die Mercaptoethylmethacrylate, die Mercaptoethylacrylate, 2-Mercaptopropylmethacrylat und 2-Mercaptopropylacrylat ganz besonders bevorzugt. Am meisten bevorzugt ist 2-Mercaptoethylmethacrylat.

Die Menge des nukleophil funktionalisierten (Meth)acrylsäureesters wird so gewählt, dass freie Isocyanatgruppen, die nach der Polykondensation zwischen Polyisocyanat und Polyol noch vorhanden sind, vollständig umgesetzt werden. Um die optimale Menge an nukleophil funktionalisiertem (Meth)acrylsäureester zu bestimmen, kann nach der Polykondensation der Gehalt freier Isocyanatgruppen bestimmt werden. Die Bestimmung des Gehalts freier Isocyanatgruppen kann mit Methoden erfolgen, die dem Fachmann bekannt sind. Dazu zählen u.a. infrarotspektroskopische Methoden oder Titrationen.

Wie eingangs erwähnt, ist die Zugabe eines Stabilisators zu der erfindungsgemäßen Dispersion nicht zwingend notwendig. Falls es dennoch für nötig erachtet werden sollte, kann aber ein Stabilisator zugegeben werden. Es können prinzipiell alle Stabilisatoren zugesetzt werden, die dem Fachmann zur Stabilisierung von Polyurethandispersionen geläufig sind, insbesondere Dimethylolpropionsäure, Phasenvermittler auf Basis von Ethylenglykol und 2-Amino-2-methylpropanol.

Bei der Herstellung der erfindungsgemäßen Dispersion werden keine Diamine oder höherfunktionale Amine eingesetzt. Nicht unter diese Einschränkung fallen Katalysatoren und die oben erwähnten aminofunktionalen (Meth) acrylsäureester als Verkappungsmittel, sofern solche eingesetzt werden.

Das Polyurethan(meth)acrylat, aus dem die Partikel der erfindungsgemäßen Dispersion autbenbaut sind, besitzt im allgemeinen ein gewichtsmittleres Molekulargewicht von 3000 g/mol bis 600000 g/mol, vorzugsweise aber von 3000 g/mol bis 500000 g/mol.

Bei der erfindungsgemäßen Dispersion haben die Polyurethan(meth)acrylatpartikel einen mittleren Durchmesser von weniger als 40 nm, wodurch die erwünschte Transparenz erzielt wird. Bevorzugt wird ein mittlerer Partikeldurchmesser von weniger als 20 nm erzielt, mehr bevorzugt von weniger 10 nm, noch mehr bevorzugt weniger als 7 nm. Besonders vorteilhafte erfindungsgemäß erzielte Partikeldurchmesser betragen 2-7 nm, vorteilhafter 2-6 nm, noch vorteilhafter 3- 6 nm und am vorteilhaftesten 3-5 nm.

Die angegebenen Durchmesser können mittels Lichtstreuung bestimmt werden. Für Details wird auf die beigefügten Ausführungsbeispiele verwiesen.

Unter dem Feststoffgehalt ist im Rahmen der vorliegenden Erfindung das Gewicht der Polyurethan(meth) acrylatpartikel bezogen auf das Gewicht der gesamten Dispersion zu verstehen. In der erfndungsgemäßen Dispersion beträgt der Feststoffgehalt vorzugsweise mindestens 40 Gew.-%, mehr bevorzugt mindestens 50 Gew.-%. Besonders bevorzugt ist ein Feststoffgehalt von 50 -80 Gew.-% und am meisten bevorzugt 50-70 Gew.-%.

Die Viskosität der erfindungsgemäßen Dispersionen liegt im Allgemeinen zwischen 0,1 und 5,0 Pa·s, gemessen rheologisch mit einer Kegel-Platte-Geometrie bei einer Scherrate von 100 $s^{-1}$ und T = 25-26°C. Für Details zur Methode wird auf die beigefügten Ausführungsbeispiele verwiesen. Bevorzugt liegt die Viskosität zwischen 0, 1 und 2,0 Pa·s.

Ein entscheidender Vorteil der vorliegenden Erfindung ist die Transparenz der Dispersion. Ein Maß für die Transparenz ist im Rahmen der vorliegenden Erfindung die Extinktion, die als negativer dekadischer Logarithmus des Transmissionsgrades definiert ist:

$$E = -\lg \frac{I}{I_0}$$

$\frac{I}{I_0}$ = *Transmissionsgrad, I = ausfallende Strahlung, $I_0$ = einfallende Strahlung*

Erfindungsgemäß beträgt die Extinktion im Wellenlängenbereich von 400 bis 800 nm bei einer Dispersion mit 6 - 9 Gew.-% Partikeln weniger als 0,4. In bevorzugten Ausführungsformen beträgt die Extinktion weniger als 0,2, bei noch bevorzugteren Ausführungsformen weniger als 0,1. In den vorteilhaftesten Ausführungsformen beträgt die Extinktion weniger als 0,05 und günstigstenfalls sogar weniger als 0,03 bezogen auf eine Wellenlänge zwischen 400 und 800 nm und bei 6 - 9 Gew.-% Partikelgehalt.

Bei der ausgehärteten Dispersion werden ebenfalls hervorragende Transmissionen bzw. geringe Extinktionswerte erzielt. Die Extinktionswerte der ausgehärteten Dispersion mit 6 - 9 Gew.-% Partikelgehalt liegen im Wellenlängenbereich von 400 - 800 nm zwischen 0,03 und 0,7, bei einer gemessenen Schichtdicke von 180 - 300 μm. Besonders bevorzugt ist der Bereich bis maximal 0,2.

Die erfindungsgemäßen Dispersionen zeichnen sich außerdem durch eine sehr hohe Stabilität aus. Stabilität bedeutet im Rahmen der vorliegenden Erfindung, dass die Dispersion mindesten zwei Monate bei Raumtemperatur ohne sichtbare Veränderung gelagert werden kann und weder eine Agglomeration, noch ein Ausfallen der dispergierten Partikel beobachtbar ist.

Die Erfindung betrifft in einem weiteren Aspekt ein Herstellungsverfahren für die eingangs beschriebene Dispersion.

Bei diesem Verfahren setzt man in einem Rührkessel ein Polyisocyanat mit mindestens einem Polyol und einem nukleophil funktionaliserten (Meth)acrylsäureester in einem Reaktivverdünner um. Diese Reaktanten wurden zuvor eingehend beschrieben. Das Verfahren ist dadurch gekennzeichnet, dass man die Umsetzung bei einer Rührergeschwindigkeit von mindestens 5 m/s durchführt, wobei das Verhältnis von Rührerdurchmesser zu Gefäßdurchmesser 0,3-0,80 beträgt und der Abstand des Rührers vom Gefäßboden das 0,25 bis 0,5 fache des Rührerdurchmessers beträgt.

Wie bereits zuvor erwähnt werden bei der Herstellung der Dispersion in einer besonders bevorzugten Ausführungsform ein hochmolekulargewichtiges und ein niedermolekulargewichtiges Polyol eingesetzt. Zur Umsetzung der genannten Bestandteile sind verschiedenste Verfahrensvarianten denkbar. So kann in einer bevorzugten Ausführungsform des Verfahrens z.B. ein hochmolekulargewichtiges Polyol vorgelegt werden und anschließend die Zugabe von einem niedermolekulargewichtigem Polyol, dem Polyisocyanat und dem Reaktivverdünner erfolgen. Ebenso ist es nach einer weiteren bevorzugten Ausführungsform aber auch möglich, das Polyisocyanat vorzulegen und anschließend das hochmolekulargewichtige und niedermolekulargewichtige Polyol und den Reaktivverdünner zuzugeben. Ein Teil des Reaktivverdünners kann wahlweise vorgelegt werden.

Der nukleophil funktionaliserte (Meth)acrylsäureester wird in jedem Fall zuletzt zugegeben, um mit nach der Bildung der Polyurethanpartikel verbliebenen freien Isocyanatgruppen zu reagieren und Polyurethan(meth)acrylatpartikel zu bilden.

Obwohl für den Fachmann selbstverständlich, sei darauf hingewiesen, dass die eingesetzten Reaktanten, und insbesondere das Polyol, wasserfrei sein sollten.

Um die Umsetzung zu beschleunigen, können vorteilhaft Katalysatoren, wie beispielsweise tertiäre Amine, zu diesen gehören unter anderem 1,4-Diazabicyclo[2.2.2]octan, N-Methylmorpholin, N,N-Diethylcyclohexylamin und N,N,N',N'-Tetramethyldiaminomethan, oder organische Zinnverbindungen, zu diesen gehören unter anderem Dibutylzinndilaurat und Zinndioctoat, eingesetzt werden. Diese Katalysatoren sowie die Mengen, in denen diese Verbindungen eingesetzt werden, sind in der Fachwelt weithin bekannt und beispielsweise in Ullmann's Encyclopedia of Industrial Chemistry, 5. Aufl., Stichwort "Polyurethanes" beschrieben.

Bei der Umsetzung können Inhibitoren zugesetzt werden, die eine radikalische Polymerisation der (Meth) acrylate während der Reaktion verhindern. Diese Inhibitoren sind in der Fachwelt weithin bekannt. Erfindungsgemäß einsetzbare Inhibitoren sind insbesondere Inhibitoren aus der Klasse der Dihydroxybenzole, der Benzochinone, der gehinderten Phenole und gehinderten Phenole auf Basis von Triazinderivaten. Bezogen auf das Gewicht der gesamten Reationsmischung beträgt der Anteil der Inhibitoren einzeln oder als Mischung im allgemeinen 0,01 - 0,5 % (Gew./Gew.).

Ein wichtiger Parameter für die Herstellung der erfindungsgemäßen Dispersion ist die Rührgeschwindigkeit, ausgedrückt als Umfangsgeschwindigkeit des Rührers. Die Umfangsgeschwindigkeit kann nach der folgenden Gleichung aus der Drehzahl und dem maximalen Durchmesser des Rührers errechnet werden:

$$v = \frac{\pi \cdot D \cdot n}{60} [m/s]$$

n Umdrehungen ($min^{-1}$)

D Durchmesser (m)
v Umfangsgeschwindigkeit (m/s)

In einer bevorzugten Ausführungsform des Verfahrens beträgt die Umfangsgeschwindigkeit mindestens 12 m/s und noch mehr bevorzugt mindestens 14 m/s.

Während der Umsetzung werden die Reaktanten in dem Reaktivverdünner dispergiert, um die erfindungsgemäß angegebenen Teilchengrößen zu erhalten. Dafür sind sowohl die Geometrie des Arbeitsgefäßes als auch der Durchmesser, die Umfangsgeschwindigkeit und der Bodenabstand des Rührers aufeinander abzustimmen. Erfindungsgemäß beträgt, wie zuvor erwähnt, das Verhältnis von maximalem Rührerdurchmesser zum Gefäßdurchmesser 0,3-0,80 und der Abstand des Rührers vom Gefäßboden das 0,25 bis 0,5 fache des Rührerdurchmessers.

Als Rührer zum Erzielen bester Ergebnisse wird ein schneillaufender radial oder axial fördernder Rührer eingesetzt. Besonders bevorzugt wird als Rührer ein Scheibenrührer oder eine Dispergierscheibe verwendet. Am meisten bevorzugt ist die Verwendung einer Dispergierscheibe (Zahnscheibe). Eine erfindungsgemäß einsetzbare Dispergiervorrichtung ist von der Firma VMA-Getzmann unter der Bezeichnung DISPERMAT® F1 erhältlich.

Der Produktbeschreibung für die Dispergiervorrichtung DISPERMAT® F1 sind die nachfolgend angegebenen Informationen zu entnehmen, wie Laborversuche auf die Betriebsproduktion übertragen werden können:

> Der Dispergiererfolg hängt zum einen vom Transport der Agglomerate in die Nähe der Zahnscheibe, zum anderen aber auch von dem mechanischen Rührleistungseintrag in das Dispergiergefäß ab. Der mechanische Leistungseintrag ist der Parameter, der den maximal erreichbaren Endzustand der Desagglomeration bestimmt, während der Transport der Agglomerate die Zeitdauer bestimmt, die erforderlich ist, um den endgültigen Dispergierzustand zu erreichen. Die Dispergierung der Agglomerate erfolgt hauptsächlich in dem Scherfeld, welches sich an den Stirnflächen der Dispergierscheibe ausbildet. Das sich maximal einstellende Scherfeld wird durch den äußersten Rand der Zahnscheibe bestimmt, da sich dieser Teil mit der höchsten Geschwindigkeit durch die Dispersion bewegt. Daher kann diese Geschwindigkeit (die Umfangsgeschwindigkeit) als Kriterium für die Übertragung von Laborergebnissen auf die betriebliche Praxis herangezogen werden. Diese Aussage betrifft den erzielbaren Endzustand, nicht jedoch den Zeitbedarf dafür. Bei sonst gleichen Bedingungen wird der Endzustand der Dispergierung im Labormaßstab eher erreicht, weil hier der Weg der Agglomerate zur Zahnscheibe kürzer ist als beim Dissolver in der Produktion. Die exakte Übereinstimmung hinsichtlich des erzielbaren Endzustandes wird auch nur dann erreicht, wenn die Temperatur des Dispergiergutes bei der Labordispergierung vergleichbar mit der Temperatur bei der Dispergierung im Pröduktonsmaßstab ist.

Durch die voranstehenden Informationen ist der Fachmann in der Lage, die Herstellung der erfindungsgemäßen Dispersion vom Labor in den Betriebsmaßstab zu übertragen und umgekehrt.

Bei der Herstellung der Dispersion wählt man das Molverhältnis der Isocyanatgruppen zu den Hydroxygruppen aus dem Polyol bzw. den Polyolen zu 1,01 bis 1,8 und vorzugsweise 1,03 bis 1,7.

Das Molverhältnis der OH-Gruppen des niedermolekulargewichtigen Polyols zu den OH-Gruppen des hochmolekulargewichtigen Polyols beträgt 0 bis 1,4 (wobei der Wert 0 die Ausführungsform beschreibt, in der überhaupt kein niedermolekulargewichtiges Polyol eingesetzt wird) und vorzugsweise 0,3 bis 1,2.

Die Umsetzung der Isocyanatgruppen mit den Hydroxygruppen ist in der Fachwelt weithin bekannt. So kann die Reaktionstemperatur über einen weiten Bereich variieren, aber häufig liegt die Temperatur im Bereich von 30 °C bis 120 °C, vorzugsweise im Bereich von 60 °C bis 90 °C. Ähnliches gilt für den Druck bei dem die Umsetzung vollzogen wird. So kann die Reaktion sowohl bei Unterdruck als auch bei Überdruck stattfinden. Vorzugsweise wird sie aber bei Normaldruck durchgeführt. Die Reaktion kann unter Luft als auch unter Schutzgasatmosphäre stattfinden, wobei vorzugsweise ein geringer Sauerstoffanteil vorhanden ist, da dieser eine mögliche Polymerisation inhibiert.

Die Aushärtung der Dispersion geschieht durch radikalische Polymerisation des Reaktivverdünners durch Zusatz eines Polymersationsinitiators. Im Prinzip können in diesem Rahmen alle dem Fachmann bekannten Verfahren zur Aushärtung von Klebstoffen durch Polymerisation angewandt werden. So ist auch der Initiator zur Aushärtung nicht speziell beschränkt. Verwendbare Initiatoren sind z.B. die Peroxide und Hydroperoxide, wie z.B. Dibenzoylperoxid, Diacetylperoxid und t-Butylperoxid. Eine weitere Klasse von Initiatoren sind die wärmeaktivierbaren Initiatoren, insbesondere die Azoinitiatoren, wie z.B. Azobisisobutyronitril.

Die Peroxidzersetzung kann mit Hilfe von Promotern bei niedrigen Temperaturen induziert werden. Ein besonders bevorzugter Promoter ist z.B. N,N-Bis-(2-hydroxyethyl)-p-toluidin (DEPT).

Die ausgehärtete Dispersion besitzt eine ausgesprochen hohe Schlagzähigkeit und Zugscherfestigkeit. Die Zugscherfestigkeit, im Rahmen der vorliegenden Erfindung auch als Klebefestigkeit $\tau$ bezeichnet, wird gem. der Norm DIN EN 1465 bestimmt und in MPa angegeben.

Die Zugscherfestigkeitswerte der ausgehärteten Dispersion liegen im Bereich von 1 bis 12 MPa, je nach verwendeter Dispersion und verwendetem Träger.

Durch diese beschriebene Klebefestigkeit eignet sich die erfindungsgemäße Dispersion besonders als Klebstoff. Demzufolge betrifft ein weiterer Aspekt der vorliegenden Erfindung die Verwendung der Dispersion als Dispersionsklebstoff. Zur Formulierung eines Klebstotfes kann die Dispersion in reiner Form, d.h. wie zuvor beschrieben, eingesetzt werden. Sie kann aber ebenso mit weiteren Reaktivklebern, insbesondere mit Reaktivklebesystemen auf (Meth) acrylatbasis, versetzt werden.

Als (Meth)acrylatklebesysteme kommen insbesondere in Betracht:

A-B-Typen: Die Komponente A besteht aus dem Acrylat-Harz mit dem Beschleuniger und die Komponente B aus dem Harz mit dem Härterzusatz. Beide Komponenten sind ohne Topfzeitbegrenzung lagerfähig. Die Reaktion findet erst statt, wenn Beschleuniger, Härter und Harz zusammen gemischt sind. In diesem Moment ist also die Topfzeit der Mischung wieder zu berücksichtigen. Eine andere Möglichkeit besteht darin, die Komponente A auf das eine und die Komponente B auf das zweite Fügeteil aufzutragen. Nach dem Fixieren der Fügeteile erfolgt dann eine Vermischung beider Komponenten und es kommt zur Klebeschichtaushärtung.

Direkter Härterzusatz: Der Härter wird in kleine Mengen von ca. 1 bis 3% als Pulver in das Harz eingemischt. Wegen der geringen Härtermenge ist in diesem Fall auf eine sehr gute Durchmischung besonders zu achten. Bei diesem Vorgehen muss wegen der begrenzten Topfzeit (im Minutenbereich mit Ausnahme bis eine Stunde Zeit) sofort geklebt werden. Bei Monomeren mit einer hohen Reaktionsgeschwindigkeit ist dieses Verfahren nicht anwendbar, die Verarbeitung erfolgt in diesen Fällen nach dem Härterlack-Verfahren.

Härterlack-Verfahren, oder auch "No-Mix"-Verfahren: Diese Variante sieht vor, dass der Härter in einem organischen Lösungsmittel gelöst auf eines der beiden Fügeteile aufgetragen wird. Nach Abdunsten des Lösungsmittels verbleibt der Härter in sehr dünner Schicht auf der Oberfläche und kann dort eine ausreichend lange Zeit verbleiben ohne sich zu verändern. Auf das andere Fügeteil wird die mit Beschleuniger versehen Harzkomponente aufgetragen, auch diese ohne Topfzeitbegrenzung. Erst wenn beide Fügeteile miteinander fixiert werden, kommt es durch den Kontakt von Härter und Harz-/Beschleuniger-System zu der chemischen Reaktion der Klebschichtausbitdung.

Ein weiterer Aspekt der Erfindung betrifft die Verwendung der beschriebenen Dispersion zur Herstellung von transparentem Gussglas. Dabei kann die Dispersion wiederum in reiner Form eingesetzt werden oder auch in Mischung mit anderen Gussglasmischungen, insbesondere (Meth)acrylaten. Gussglasmischungen und Verfahren zur Herstellung von Gussgläsern sind dem Fachmann bekannt und sollen hier nicht eingehender beschrieben werden. Zur Bildung von Gussgläsern kann die Dispersion so gehärtet werden, wie schon zuvor beschrieben.

In noch einem weiteren Aspekt betrifft die vorliegende Erfindung auch einen Formkörper, der aus der zuvor beschriebenen erfindungsgemäßen Dispersion durch Aushärtung der Dispersion erhältlich ist. Der Formkörper kann vorzugsweise ein Gussglas sein, wobei die Form des Formkörpers aber nicht besonders beschränkt ist.

Die erfindungsgemäße Dispersion im ausgehärteten Zustand besitzt, wie zuvor erwähnt, nicht nur eine hervorragende Klebekraft (Zugscherfestigkeit) und eine hohe Transparenz, sondern auch sehr gute Schlagzähigkeitseigenschaften. Daher betrifft noch ein weiterer Aspekt der vorliegenden Erfindung die Verwendung der erfindungsgemäßen Dispersionen als schlagzähigkeitsverbesserndes Mittel in Formmassen, Klebstoffen und Gussgläsern, insbesondere in Systemen auf Basis von (Meth)acrylaten.

## BEISPIELE

Die Erfindung wird nachfolgend durch Beispiele verdeutlicht, wobei diese nicht als Beschränkung der erfinderischen Idee zu verstehen sind.

### 1. Chemikalien

| *Isocyanate* | | | |
|---|---|---|---|
| Vestanat IPDI (Degussa) | IPDI Isophorondiisocyanat | 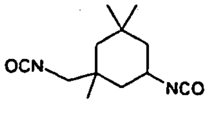 | >99.5%, Mw(222.29), $d_{20}$(1.058-1.064), Flp (155), 37.5%-37.8%NCO |
| Vestanat TMDI (Degussa) | 2,2,4-/2,4,4-Trimethylhexamethylen-diisocyanat (1:1). | 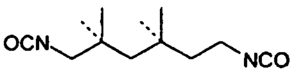 | Mw(210.28) ≥99.5%, $d_{20}$(1.010-1.016), Flp (148˚C), 39.7-40%NCO |

(fortgesetzt)

| | | | |
|---|---|---|---|
| *Polyole* | | | |
| PTHF 2000 (BASF) | Polytetrahydrofuran = Polytetramethylen-Etherglycol | 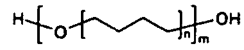 | Mw(-650) |
| Krasol LBH 2000 (Kaucuk) | Polybutadiendiol mit OH-Endgruppen | 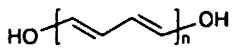 | Mw(2160), ≥99.5%, $d_{25}$ (0.900), Flp(>225˚C) |
| Krasol LBH 2000 (Kaucuk) | Polybutadiendiol mit OH-Endgruppen | 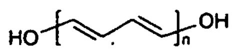 | Mw(ca. 3000) |
| Krasol LBH 5000 (Kaucuk) | Polybutadiendiol mit OH-Endgruppen | 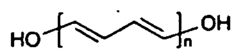 | Mw(4638), ≥99.5%, $d_{25}$ (0.900), Flp(>225˚C), nOH(23.62 gKOH/kg) |
| Baycoll BT 5035 (Bayer) | Propylenoxyd/ Ethyfenoxid Glycerin trifunktionelles Polypropylenetherpolyol | | Mw(-4800), Smp(290), $d_{20}$(1.04), Flp(195˚C), nOH(35.0+/-2.0 mgKOH/g) |
| BD 1000 (Goldschmidt) | PBMA Poly-n-butylmethacrylatdiol auf n-Butylmethacrylat-Monomerbasis | 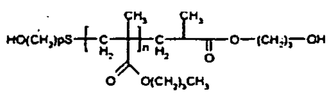 | Mw(1000), Tg(-30˚C) |
| 1,4-BDO (Applichem) | 1,4-butandiol | 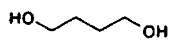 | Mw(90.12), >99%, $d_{20}$ (1.02), Smp(-20˚C), Siedep.(230˚C) |
| *Katalysator* | | | |
| DBTDL (Merck) | Dibutylzinndilaurat zur Synthese = dibutylzinndidodecanat (Katalysator) | 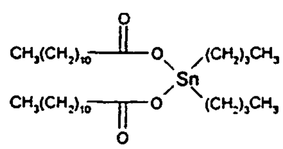 | >97%, Mw(631.55), $d_{20}$ (1.05) |
| *Methacrylate* | | | |
| HEMA (Degussa - Röhm Methacrylate) | 2-HEMA 98 2-Hydroxyethylmethacrylat | 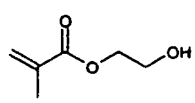 | ≥98%, Mw(130.14), $d_{20}$ (1.07), Fp(101˚C), Siedep.(+250˚C) |
| POEMA (Degussa - Röhm GmbH) | 2-Phenoxyethylmethacrylat mit it 1,5% 2-Phenoxyethanol | 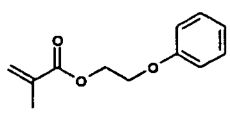 | >95.0%, Mw(206.24), $d_{20}$(1.080), Flp (>100˚C), Siedep. (80-85˚C bei 0.1 hPa) |
| *Stabilisator* | | | |
| Bis-MPA Perstrop | DMPA Dimethylolpropionsäure Für die Steuerung der Partikelgröße | 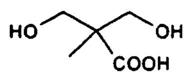 | >97%, mw(134.13), $d_{20}$ (0,840), Smp (180-190˚C), Flp (>150˚C), nOH(835 gKOH/kg), nH(415 gKOH/kg) |

(fortgesetzt)

| | | | |
|---|---|---|---|
| *Stabilisator* | | | |
| AMP (90®/95®) (Angus chemie GmbH) | 2-Amino-2-methyl-1-propanol Codispersant für Partikelsysteme | 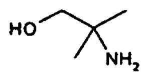 | 100%, mw(89.14), $d_{40}$ (0,928). Siedep. (165˚C), Smp(49-53˚C), Flp(81˚C) |
| *Härter und Beschleuniger* | | | |
| DPBO | Dibenzoylperoxid (Härter) | 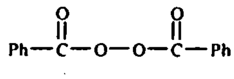 | >97%, mw(242.23) Smp (104-106˚C) |
| DEPT | N,N-Bis-(2-hydroxyethyl)-p-toluidin (Beschleuniger) | 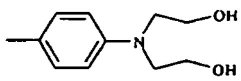 | >97%, mw(195.26), Smp(49-53˚C), Flp(> 150˚C), |

## 2. Rezepturen und Durchführung

### Geräte

Dispersionsgerät: Dispermat F1 der Firma VMA-Getzmann GmbH mit d = 22 mm
Dissolverscheibe
250 mL Glasreaktor mit Deckel, Dichtungsring, Stahlverschluss
Tropftrichter 250 mL, temperierbar
Thermostat
100 mL Tropftrichter
Ölbad mit Heizplatte
Thermometer mit Temperaturfühler und Anschluss an Heizplatte
Vakuumpumpe vom Trockenschrank

### Beispiel 1 (t37): Krasol 5000, 11000 U/min

Chemikalien:

Vestanat IPDI, Isophorondiisocyanat, Degussa.
POEMA, Phenoxyethylmethacrylat, Degussa.
Krasol LBH 5000, Kaucuk. M = 4638 g/mol, OH-Gruppen: 0,421 mmol/g
n-Butandiol, BASF.
DBTDL, Dibutylzinnlaurat, Merck.
2-HEMA, 2-Hydroxyethylmethacrylat 97%, Degussa.

Teil 1: Isocyanatmischung.

4,2504 g Vestanat IPDI und 18,99 g POEMA.

Teil II: Diolmischung

24,9723 g Krasol LBH 5000, 0,5348 g n-Butandiol und 11,2080 g POEMA auf 50 ˚C erwärmen.

Teil III: Katalysator

0,0324 g DBTDL

Teil IV: HEMA

2,03 g 2-HEMA

Durchführung:

Teil II wurde über einen temperierten Tropftrichter zu Teil I im 250 mL Glasreaktor zugetropft und über I h lang bei RT mit Dispermat bei 11000 U/min gemischt. Der 250 mL Glasreaktor wurde auf 60 ˚C erwärmt und die Hitze 30 min. gehalten. Danach wurde der Teil III zugetropft und 30 min dispergiert. Anschließend erfolgte die Zugabe von 2-HEMA und das Gemisch wurde auf RT abkühlen gelassen. Schließlich wurde Vakuum angelegt (max.) und bis zu 1 h entgast.

Die Dispersion blieb über zwei Monate bei Raumtemperatur stabil.

**Beispiel 2 (t37). Krasol 3000, 11000 U/min**

Das Beispiel entsprach dem Beispiel 1, mit Ausnahme der folgenden Änderungen:

Krasol LBH 3000, M = 2650 g/mol, OH-Gruppen: 0,737 mmol/g.

Teil II: Diolmischung:

14,2650 g Krasol LBH 3000, 0,5348 g n-Butandiol und 11,2080 g POEMA wurden auf 50 ˚C erwärmt.

Die Dispersion blieb über zwei Monate bei Raumtemperatur stabil.

**Beispiel 3 (t37): Krasol 2000, 5000 U/min**

Das Beispiel entsprach dem Beispiel 1 mit Ausnahme der folgenden Änderungen:

Krasol LBH 2000, M = 2160 g/mol, OH-Gruppen: 0,887 mmol/g

Dispermat mit 5000 U/min

Teil II: Diolmischung:

11,8527 g Krasol LBH 2000, 0,5348 g n-Butandiol und 11,2080 g POEMA wurden auf 50 ˚C erwärmt.

Die Dispersion blieb über zwei Monate bei Raumtemperatur stabil.

**Beispiel 4 (t37): Krasol 2000, 11000 U/min**

Die Rezeptur entsprach dem Beispiel 1 mit Ausnahme der folgenden Änderung: Krasol LBH 2000, M = 2160 g/mol, OH-Gruppen: 0,887 mmol/g .

Die Durchführung entsprach dem Beispiel 3, mit folgender Veränderung:

Dispermat mit 11000 U/min

Die Dispersion blieb über zwei Monate bei Raumtemperatur stabil.

**Beispiel 5 (t34):**

Chemikalien:

Dibutylzinnlaurat
Phenoxyethylmethacrylat
Vestanat IPDI
2-Hydroxyethylmethacrylat
Polytetrahydrofuran 2000
Argon

Teil 1: 27,8466 g PTHF 200 und 16,20g POEMA wurden bei T = 60 ˚C, 10000 U/min über eine Zeit von t = 120 min gerührt.

Teil II: 5,4947 g Vestanat IPDI und 16,00 g POEMA wurden bei T = 50 ˚C über einen Tropftrichter (unter Argon) zugegeben.

Teil III: 0,0367 g DBTDL wurden zugegeben und über eine Zeit von t = 60 min gerührt.

Teil IV: 2,80 g 2-HEMA wurden zugegeben und solange gemischt, bis die Mischung homogen war.

Die Dispersion blieb über zwei Monate bei Raumtemperatur stabil.

**Beispiel 6 (t33):**

Chemikalien:

Toluol
1 -M- Salzsäure
Bromkresolgrün
Isopropanol
2-Hydoxyethylenmethacrylat 97%
Dibutylzinnlaurat
POEMA
1,4-butandiol
Vestanat TMDI
Krasol LBH 2000
Diethylamin

Teil I: 28,399 g Krasol 2000 und 0,611 g n-Butandiol wurden bei T = 110˚C, 10000 U/min über eine Zeit von t = 30 min gerührt.

Teil II: Danach erfolgte die Zugabe von 10,82 g POEMA. Es wurde auf T = 60 ˚C abkühlen gelassen. Anschließend erfolgte die Zugabe von 0,0096 g DBTDL.

Teil III: Anschließend wurden 4,22 g Vestanat TMDI und 20,65 g POEMA über einen Tropftrichter über eine Zeitdauer von t = 30 min zugegeben.

Teil IV: Die Mischung wurde weitere t = 30 min gerührt, Schließlich erfolgte die Zugabe von 0,054 g 2-HEMA unter Rühren über t = 90 min.

Die Dispersion blieb über zwei Monate bei Raumtemperatur stabil.

**Beispiel 7 (t32):**

Teil I: 20,77 g POEMA und 2,02 g Vestanat IPDI wurden bei T = 60 ˚C über eine Zeitdauer von t = 60 min gerührt.

Teil II: Danach erfolgte die Zugabe von 0,0268 g DBTDL

Teil III: Anschließend wurden 27,13 g Baycoll 5035 und 10,12 g POEMA über einen Tropftrichter bei T = 50 ˚C, 11000 U/min über eine Zeitdauer von t = 30 min zugegeben.

Teil IV: Schließlich wurden 0,072 g 2-HEMA über eine Zeitdauer von t = 30 min zugegeben.

Die Dispersion blieb über zwei Monate bei Raumtemperatur stabil.

**Beispiel 8 (t27)**

Teil I: 27, 1311 g Krasol LBH 5000, 0,526 g BD-1000, 0,07560 g Bis-MPA, 0,0584 g AMP-90 und 15,54 g POEMA wurden eine Stunde bei T = 80˚C gemischt.

Teil II: Nach 20 min. wurden unter Rühren bei 12000 U/min 1,72 g Vestanat IPDI und 15,22 g POEMA zugetropft.

Teil III: Danach wurden 0,0184 DBTDL zugefügt.

Teil IV: Schließlich wurden 0,054 g HEMA zugegeben.

Die Dispersion blieb über zwei Monate bei Raumtemperatur stabil.

**3. Transparenz/Transmission**

a) Flüssigproben

Zur Bestimmung der Transmission wurden im Spektralbereich von 300 - 1100 nm Spektren in THF aufgenommen. Die unverdünnten Proben waren vollständig durchsichtig, jedoch aufgrund der Empfindlichkeit des Meßsystems einer direkten Messung nicht zugänglich. Die in der Tabelle I angegebenen Einwaagen wurden jeweils mit 2000 µl THF aufgefüllt und mit einem UV/VIS-Spektrometer Typ Agilent 8453 vermessen.

**Tabelle 1**

| **Probe** | **Einwaage Probe [g]** | **THF-Volumen [µl]** |
|---|---|---|
| **Vergleich-POEMA** | 0,0309 | 2000 |
| **Beispiel 8** | 0,0239 | 2000 |
| **Beispiel 7** | 0, 0234 | 2000 |
| **Beispiel 6** | 0,0233 | 2000 |
| **Beispiel 5** | 0,0296 | 2000 |
| **Beispiel 3** | 0,0299 | 2000 |
| **Beispiel 2** | 0,0343 | 2000 |
| **Beispiel 1** | 0,0250 | 2000 |
| **Beispiel 4** | 0,0294 | 2000 |

Die Spektren sind in der beigefügten Abbildung 1 dargestellt. Der Übersichtlichkeit halber sind die Extinktionswerte bei 400, 600 und 800 nm in Tabelle 2 aufgeführt.

**Tabelle 2:**

| Extinktionswerte in Abhängigkeit der Wellenlänge | | | | | |
|---|---|---|---|---|---|
| **Wellenlänge [nm]→ Probe↓** | **400** | **500** | **600** | **700** | **800** |
| **Vergleich - POEMA** | 0,10 | 0,08 | 0,07 | 0,06 | 0,05 |
| **Beispiel 8** | 0,37 | 0,36 | 0,31 | 0,28 | 0,24 |
| **Beispiel 7** | 0,22 | 0,22 | 0,20 | 0,19 | 0,18 |
| **Beispiel 6** | 0,01 | 0,00 | 0,00 | 0,00 | 0,00 |
| **Beispiel 5** | 0,01 | 0,01 | 0,00 | 0,00 | 0,00 |
| **Beispiel 3** | 0,02 | 0,02 | 0,02 | 0,02 | 0,02 |

(fortgesetzt)

| Extinktionswerte in Abhängigkeit der Wellenlänge | | | | | |
|---|---|---|---|---|---|
| **Wellenlänge [nm]→ Probe↓** | **400** | **500** | **600** | **700** | **800** |
| **Beispiel 2** | 0,15 | 0,13 | 0,11 | 0,09 | 0,08 |
| **Beispiel 1** | 0,09 | 0,08 | 0,06 | 0,05 | 0,05 |
| **Beispiel 4** | 0,01 | 0,01 | 0,01 | 0,00 | 0,00 |

b) ausgehärtete Proben

Durchführung Probenherstellung:

Zwei Objektträger wurden mit Ethanol gesäubert. Alufolie (0,03 mm) wurde so zurechtgeschnitten, dass sie die beiden Ränder der Objektträger zu ca. 15 mm bedeckte. Die Dicke wurde mit einem Dickenmessgerät bestimmt. Danach wurden die Folienstücke beidseitig an den Rand des Objektträgers gelegt. Auf der Analysenwaage wurden in einer Aluschale 0,5003 g (100%) der Probe (der entsprechenden Dispersion gemäß dem Beispiel) abgewogen und 0,0252 g (5,03%) Dibenzoylperoxid zugegeben. Die Komponenten wurden mit einem Glasstab gut vermischt. In einem Wägschiffchen wurden 0,0041 g (0,82%) N,N- Dihydroxy- ethyl- p- toluidin abgewogen und ebenfalls gut durchmischt. Wenn das Gemisch langsam zähflüssig wurde, wurde es mit einem Glasstab vorsichtig auf dem Objektträger aufgetragen und mit einem anderen Objektträger bedeckt. Die beiden Objektträger wurden so lange aufeinander gedrückt, bis das Harz ausgehärtet war.

Die verwendeten Mengen Harz, Beschleuniger (Diethylol-p-toluidin) und Dibenzoylperoxidpulver sind in der Tabelle 3 zusammengefasst.

**Tabelle 3**

| Probe | Harz [g] | Härter [g] | Beschleuniger [g] | Schichtdicke μm |
|---|---|---|---|---|
| **Beispiel 6** | 0,5009 g | 0,0250 g | 0,0041 g | 180- 300 |
| **Beispiel 1** | 0,5010 g | 0,0255 g | 0,0043 g | 300 |
| **Beispiel 3** | 0,5010 g | 0,0252 g | 0,0042 g | 180-300 |
| **Beispiel 2** | 0,5023 g | 0,0252 g | 0,0042 g | 180- 300 |
| **Beispiel 1** | 0,5035 g | 0,0252 g | 0,0041 g | 180-300 |
| **Beispiel 5** | 0,5001 g | 0,0250 g | 0,0041 g | 180- 300 |
| **Beispiel 5** | 0, 5008 g | 0,0253 g | 0,0044 g | 300 |
| **Beispiel 4** | 0,5003 g | 0,0252 g | 0,0041 g | 180- 300 |

Die erhaltenen Spektren für die ausgehärteten Proben sind in der beigefügten Abbildung 2 dargestellt. Der Übersichtlichkeit halber sind die Extinktionswerte bei ausgewählten Wellenlängen in der Tabelle 4 aufgeführt.

**Tabelle 4**

| Wellenlänge [nm]→ Probe↓ | 400 | 500 | 600 | 700 | 800 |
|---|---|---|---|---|---|
| **Beispiel 6** | 0,673 | 0,359 | 0,236 | 0,192 | 0,180 |
| **Beispiel 1** | 0,092 | 0,063 | 0,047 | 0,040 | 0,036 |
| **Beispiel 3** | 0,334 | 0,240 | 0,194 | 0,172 | 0,159 |
| **Beispiel 2** | 0,189 | 0,146 | 0,123 | 0,114 | 0,112 |
| **Beispiel 1** | 0,206 | 0,133 | 0,106 | 0,092 | 0,081 |
| **Beispiel 5** | 0,221 | 0,244 | 0,235 | 0,238 | 0,236 |

(fortgesetzt)

| **Wellenlänge [nm]→ Probe↓** | **400** | **500** | **600** | **700** | **800** |
|---|---|---|---|---|---|
| **Beispiel 5** | 0,061 | 0,061 | 0,057 | 0,057 | 0,057 |
| **Beispiel 4** | 0,142 | 0,102 | 0,080 | 0,069 | 0,064 |

Die Extinktionswerte liegen zwischen 0,03 und maximal 0,7 Einheiten. Besonders bevorzugt ist der Bereich bis maximal 0,2 Einheiten.

Bei obigen Proben wurden als Abstandshalter bei der Messung aus Glasperlen eingesetzt, die zu Streulicht führen. Noch bessere Werte können erhalten werden, wenn bei der Messung keine Glasperlen als Probenabstandshalter verwendet werden, wie in der Tabelle 4A gezeigt.

**Tabelle 4A**

| **Wellenlänge [nm]→ Probe ↓** | **400** | **500** | **600** | **700** | **800** |
|---|---|---|---|---|---|
| Beispiel 1 | 0,104 | 0,034 | 0,009 | -0,004 | -0,009 |
| Beispiel 3 | -0,014 | -0,023 | -0, 026 | -0,029 | -0,030 |
| Beispiel 2 | 0,140 | 0,123 | 0,117 | 0,112 | 0,115 |
| Beispiel 6 | -0,014 | -0,023 | -0,026 | -0,029 | -0,030 |
| Beispiel 5 | 0,007 | 0,003 | 0, 002 | 0,001 | 0,002 |
| Beispiel 4 | -0,027 | -0,029 | -0,028 | -0,030 | -0,030 |

## 4. Viskosität

Zur Bestimmung der Viskosität wurden die Proben unverdünnt mit einem Rheometer der Fa. Bohlin, Typ CVO im Scherratenbereich von 2,3 bis 100 $s^{-1}$ mit einem Platte-Kegel-Prüfkörper vermessen. Die Geometrie des Kegels betrug 4° /40 mm, der Scherratengradient 100. Die Temperatur betrug zwischen 25°C und 26 °C. Die Ergebnisse sind in der beigefügten Abbildung 3 dargestellt. Der Übersichtlichkeit halber sind die Viskositäten bei 40, 60, 80 und 100 $s^{-1}$ in der Tabelle 5 gegenübergestellt.

**Tabelle 5**

| | | | | | |
|---|---|---|---|---|---|
| Beispiel 1 (Krasol 5000, 11000 U/min) | γ (1/s) | 40,34 | 62,32 | 84,54 | 106,85 |
| | η (Pas) | 2,73 | 2,73 | 2,72 | 2,71 |
| Beispiel 2 (Krasol 3000, 11000 U/min) | γ (1/s) | - | - | 81,20 | - |
| | η (Pas) | - | - | 0,37 | - |
| Beispiel 4 (Krasol 2000, 11000 U/min) | γ (1/s) | 37,50 | - | - | 130,00 |
| | η (Pas) | 0,27 | - | - | 0,23 |
| Beispiel 3 (Krasol 2000, 5000 U/min) | η (1/s) | 30,50 | - | - | 102,00 |
| | η (Pas) | 0,33 | - | - | 0,30 |
| Beispiel 5 | γ (1/5) | 41,50 | 65,10 | 88,80 | 101,00 |
| | η (Pas) | 1,69 | 1,69 | 1,69 | 1,69 |
| Beispiel 6 | γ (1/s) | 42,00 | 63,20 | 79,60 | 102,00 |
| | η (Pas) | 4,05 | 3,95 | 3,90 | 3,84 |
| Beispiel 7 | γ (1/s) | 42,00 | 58,60 | 75,40 | 92,80 |
| | η (Pas) | 1,19 | 1,19 | 1,19 | 1,19 |

(fortgesetzt)

| | | | | | |
|---|---|---|---|---|---|
| Beispiel 8 | γ (1/s) | 42,30 | 54,70 | 79,80 | 106,00 |
| | η (Pas) | 1,66 | 1,65 | 1,63 | 1,61 |

**5. Schtaszähigkeits-Prüfuns nach ISO 180/U**

Identifikation der geprüften Werkstoffe:

Probenkörper 1: Beispiel 1 (Krasol 5000, 11000 U/min)
Probenkörper 2: Beispiel 2 (Krasol 3000, 11000 U/min)
Probenkörper 3: Beispiel 3 (Krasol 2000, 5000 U/min)
Probenkörper 4: Beispiel 4 (Krasol 2000, 11000 U/min)
Probenkörper 5: Beispiel 5
Probenkörper 6: Beispiel 6
Probenkörper 7: Vergleich - POEMA

Beschreibung der Beschaffenheit:

Die Probekörper wiesen eine Länge von 1 = 80 ± 2 mm auf und waren ungekerbt. Die Breite betrug b = 6,0 ± 0,2 mm, die Dicke h = 4,0 ± 0,2 mm.

Prüfgerät:

Als Prüfgerät kam das Pendelschlagwerk PSW4J, Zorn Stendal, zum Einsatz. Die Auftreffgeschwindigkeit des Pendelhammers auf die Probenmitte betrug 2,9 m/s. Das Nennarbeitsvermögen des Pendels betrug 1 Joule.

Probenkörperherstel lung:

Zur Herstellung wurde eine Aluminiumform mit innenliegender PTFA-Folie benutzt, welche durch Glasplatten an jeweils gegenüberliegenden Seiten geschlossen und wieder zerlegbar ist. Im 80 ˚C vorgeheizten Trockenschrank, WTB Binder FD, wurde das in die Form befüllte Material 2 h bei T = 80 ˚C polymerisiert. Anschließend wurde der entstandene Probenkörper aus der Form entfernt und 20 h bei T = 120 ˚C im Trockenschrank ausgehärtet. Beim Probenkörper POEMA wurde zur Polymerisation eine Heiztemperatur von T = 70 ˚C ausgewählt. Zur Polymerisation wurde das Material vor Befüllen der Form mit 0,2% AIBN, Azoisobutyronitril, versetzt und durchmischt. Die Einwaagen sind in Tabelle 6 zusammengestellt.

**Tabelle 6**

| Probenkörper | Harzmenge [g] | AIBN-Menge [g] |
|---|---|---|
| 1 (Krasol 5000, 11000 U/min) Modifier | 5,0192 | 0,0151 |
| 2 (Krasol 3000, 11000 U/min) Modifier | 5,0231 | 0,0109 |
| 3 (Krasol 2000, 5000 U/min) Modifier | 5,0801 | 0,0109 |
| 4 (Krasol 2000, 11000 U/min) Modifier | 5,1023 | 0,0101 |
| 5 | 5,1711 | 0,0110 |
| 6 | 5,0618 | 0,0132 |
| 7 (Vergleich: POEMA) | 10,0140 | 0,0200 |

Die Anzahl der geprüften Probenkörper betrug 1.
Klima bei der Vorbehandlung: Normalklima DIN 50014-23/50-2 (23 ˚C, 50% rH)
Arten des beobachteten Versagens:

POEMA versagte als vollständiger Bruch (C). ImVergleich dazu war bei den Probenkörpern 5 und 6 nur ein Teilbruch

(P) zu beobachten. Die Ergebnisse der Messung sind in Tabelle 7 angeführt.

**Tabelle 7: Schlagzähigkeit:**

| Probenkörper | Brucharbeit E[J] | Schlagzähigkeit aiU [$J/cm^2$] | Versagensart |
|---|---|---|---|
| 1 (Krasol 5000, 11000 U/min) | 0,26 | 0,11 | C |
| 5 | 0,30 | 0,13 | P |
| 6 | 0,14 | 0,06 | P |
| Vergleich: POEMA | 0,02 | 0,01. | C |

mit E = Arbeit in Joule, die aufgenommen wird, um den Probenkörper zu brechen; aiU = Schlagzähigkeit.

**6. Partikelgröße**

Die Harzproben wurden mit Methylmethacrylat im Verhältnis 1:10 verdünnt und zur Homogenisierung 2 Minuten gerührt. Mit einer Glaspipette wurden die Proben in eine Glasküvette umgefüllt (Füllhöhe: 10-15 mm) und in einen Nanosizer der Fa. Malvern gestellt. Nach einer Temperierungsphase von 2-3 Minuten wurden die Messungen im Automatikmode des Geräts durchgeführt. Die Ergebnisse sind in der folgenden Tabelle 8 zusammengefasst.

**Tabelle 8**

| **Probe** | **Partikelgröße [nm]** | **Verteilungsbreite [nm]** |
|---|---|---|
| **Beispiel 1** | 6,2 | 1,5 |
| **Beispiel 2** | 4,4 | 1,5 |
| **Beispiel 3** | 3,2 | 1,4 |
| **Beispiel 4** | 4,3 | 1,7 |
| | 2,3 | 1,3 |
| **Beispiel 4/ gefiltert** | 3,2 | 1,5 |
| | 6,1 | 3,1 |
| **Beispiel 6** | 3,5 | 1,5 |
| **Beispiel 8** | 5,0 | 2,1 |

**7. Zugscherfestiskeit**

Der Klebtest erfolgte gem. DIN EN 1465. Er wurde mit einer Zugprüfmaschine "Inspekt 20 desk" der Firma Hegewald&Peschker Mess- und Prüftechnik GmbH durchgeführt.

Die Proben wurden mit Hilfe eine Prüfplatte auf Fügeteilen aus Stahl, Aluminium und Holz in den Abmessungen 25 x 100 x 1,5 mm, die vorher mit Schmirgelpapier bearbeitet wurden, folgendermassen gehärtet:

| Schritt | Gewichtsteile | Komponente |
|---|---|---|
| I | 100 | Dispersion |
| II | 0.82 | DEPT' |
| III | 5.00 | DBPO[2] |

[1] N,N-Bis-(2-hydroxyethyl)-p-toluidin
[2] Dibenzoylperoxid

Für die Versuche wird eine Zuggeschwindigkeit von 15 mm/min benutzt.

Als Vergleichssubstanzen dienten reines Phenyloxyethylmethacrylat (POEMA) und drei handelsübliche Acrylat-Klebstoffe.

**Tabelle 9 - Zugscherfestigkeit**

| | Klebefestigkeit [MPa] | | |
|---|---|---|---|
| | Stahl | Al | Holz |
| Beispiel 7 (t 32) | 1,1 | 1,0 | 0,8 |
| Beispiel 6 (t-33) | 1,8 | 1,6 | 0,7 |
| Beispiel 5 (t-34) | 5,4 | 8,1 | n.b.' |
| Beispiel 1 (t-37) | 10,9 | n.b. | n.b. |
| Vergleichsbeispiel 1 reines POEMA | 1,7 | 1,4 | 1,4 |
| Vergleichsbeispiel 2 Cyanacrylatklebstoff[2] | 11,0 | - | - |
| Vergleichsbeispiel 3 Cyanacrylatklebstoff[3] | 5,7 | - | - |
| Vergleichsbeispiel 4 Acrylatklebstoff[4] | 14,9 | - | - |

[1] n.b. = nicht bestimmt
[2] Sico Met 8400® der Firma Sichel Werke GmbH (Henkel), Einkomponenten-Cyanacrylat-Klebstoff
[3] Pattex Blitz Gel® der Firma Pattex KgaA
[4] Agomet $^{F252}$® der Firma Agomer GmbH, Konstruktionsklebstoff auf Acrylat-Basis mit Härter. Enthält Methylmethacrylat und Dibenzoylperoxid (Härter).

Besonders bemerkenswert sind die Ergebnisse, die mit den Dispersionen aus Beispiel 5 (t-34) und Beispiel 1 (t-37) erzielt wurden. Diese besitzen auf dem vergleichbaren Träger eine viel bessere Klebfestigkeit im Vergleich zu POEMA, dem reinen Reaktivverdünner. Die Dispersion aus Beispiel 2 liefert zumindest auf Stahl und Aluminium vergleichbare Ergebnisse wie POEMA.

Mit der Dispersion aus Beispiel 1 wurden die besten Ergebnisse erhalten: die Zugscherfestigkeit betrug hierbei 10,9 MPa auf Stahl. Im Vergleich erreichte die Probe mehr als 70% der Klebfestigkeit des besten Marktproduktes aus dem Vergleichsbeispiel 4 (14.9 MPa).

Alle Beispiele und Ergebnisse zur Charakterisierung sind in der nachfolgenden Gesamtübersicht in der Tabelle 10 nochmals aufgeführt

**Tabelle 10: Versuchsübersicht**

| Rezeptur → Ausprägung ↓ | | Molmasse | mmol OH /g | | Bsp. 1 | Bsp. 2 | Bsp. 3 | Bsp. 4 | Bsp. 5 | Bsp. 6 | Bsp. 7 | Bsp. 8 |
|---|---|---|---|---|---|---|---|---|---|---|---|---|
| Isocyanat | IPDI | 221,28 | | Masse [g] | 4,250 | 4,250 | 4,250 | 4,250 | 5,495 | | 2,020 | 1,720 |
| | | | | Stoffmenge NCO [mol] | 0,038 | 0,038 | 0,038 | 0,038 | 0,050 | 0,000 | 0,018 | 0,016 |
| | TMDI | 210,27 | | Masse [g] | | | | | | 4,220 | | |
| | | | | Stoffmenge NCO [mol] | 0,000 | 0,000 | 0,000 | 0,000 | 0,000 | 0,040 | 0,000 | 0,000 |
| Reaktivverdünner | POEMA | 206,2 | | Masse [g] | 30,198 | 30,198 | 30,198 | 30,198 | 32,200 | 31,470 | 30,890 | 30,760 |
| | | | | Stoffmenge [mol] | 0,146 | 0,146 | 0,146 | 0,146 | 0,156 | 0,153 | 0,150 | 0,149 |
| Polyol | Krasol 5000 | 4638 | 0,421 | Masse [g] | 24,972 | | | | | | | 27,131 |
| | | | | Stoffmenge OH [mol] | 0,011 | 0,000 | 0,000 | 0,000 | 0,000 | 0,000 | 0,000 | 0,011 |
| | Krasol 3000 | 2650 | 0,737 | Masse [g] | | 14,265 | | | | | | |
| | | | | Stoffmenge OH [mol] | 0,000 | 0,011 | 0,000 | 0,000 | 0,000 | 0,000 | 0,000 | 0,000 |
| | Krasol 2000 | 2160 | 0,887 | Masse [g] | | | 11,853 | 11,853 | | 28,399 | | |
| | | | | Stoffmenge OH [mol] | 0,000 | 0,000 | 0,011 | 0,011 | 0,000 | 0,025 | 0,000 | 0,000 |
| | PTHF 2000 | 2000±50 | 0,999 | Masse [g] | | | | | 27,847 | | | |
| | | | | Stoffmenge OH [mol] | 0,000 | 0,000 | 0,000 | 0,000 | 0,028 | 0,000 | 0,000 | 0,000 |
| | Baycoll 5035 | 4800 | 0,624 | Masse [g] | | | | | | | 27,130 | |
| | | | | Stoffmenge OH [mol] | 0,000 | 0,000 | 0,000 | 0,000 | 0,000 | 0,000 | 0,017 | 0,000 |
| | BD 1000 | 1000 | | Masse [g] | | | | | | | | 0,526 |
| | | | | Stoffmenge OH [mol] | 0,000 | 0,000 | 0,000 | 0,000 | 0,000 | 0,000 | 0,000 | 0,001 |

(fortgesetzt)

| Rezeptur → Ausprägung ↓ | | Molmasse | mmol OH /g | | Bsp. 1 | Bsp. 2 | Bsp. 3 | Bsp. 4 | Bsp. 5 | Bsp. 6 | Bsp. 7 | Bsp. 8 |
|---|---|---|---|---|---|---|---|---|---|---|---|---|
| Diol | 1,4-Butandiol | 90,12 | | Masse [g] | 0,535 | 0,535 | 0,535 | 0,535 | 0,000 | 0,611 | | 0,000 |
| | | | | Stoffmenge OH [mol] | 0,012 | 0,012 | 0,012 | 0,012 | 0,000 | 0,014 | 0,000 | 0,000 |
| Stabilisator | Bis-MPA | 134,13 | | Masse [g] | | | | | | | | 0,076 |
| | | | | Stoffmenge [mol] | 0,000 | 0,000 | 0,000 | 0,000 | 0,000 | 0,000 | 0,000 | 0,001 |
| | AMP 90 | 89,1 | | Masse [g] | | | | | | | | 0,058 |
| | | | | Stoffmenge [mol] | 0,000 | 0,000 | 0,000 | 0,000 | 0,000 | 0,000 | 0,000 | 0,001 |

Zur Erklärung der Abkürzungen wird auf Punkt 1 - Chemikalien verwiesen

**Tabelle 10 - Fortsetzung: Versuchsübersicht**

| **Rezeptur →<br>Ausprägung ↓** | | **Molmasse** | **mmol OH /g** | | **Bsp.1** | **Bsp. 2** | **Bsp. 3** | **Bsp. 4** | **Bsp. 5** | **Bsp. 6** | **Bsp. 7** | **Bsp. 8** |
|---|---|---|---|---|---|---|---|---|---|---|---|---|
| Katalysator | DBTDL | 631,55 | | Masse [g] | 0,032 | 0,032 | 0,032 | 0,032 | 0,037 | 0,010 | 0,027 | 0,018 |
| | | | | Stoffmenge [mol] | 5,13E-05 | 5,13E-05 | 5,13E-05 | 5,13E-05 | 5,81E-05 | 1,52E-05 | 4,24E-05 | 2,91E-05 |
| Capping-Reagenz | HEMA | 130,1 | 0,97 | Masse [g] | 2,030 | 2,030 | 2,030 | 2,030 | 2,800 | 0,054 | 0,072 | 0,054 |
| | | | | Stoffmenge OH [mol] | 0,002 | 0,002 | 0,002 | 0,002 | 0,003 | 0,000 | 0,000 | 0,000 |
| Rührgeschwindigkeit [U/min] | | | | | 11000 | 11000 | 5000 | 11000 | 11000 | 11000 | 11000 | 12000 |
| UV flüssig [Extinktion] | 400 nm | | | | 0,09 | 0,15 | 0,02 | 0,01 | 0,01 | 0,01 | 0,22 | 0,37 |
| | 500 nm | | | | 0,08 | 0,13 | 0,02 | 0,01 | 0,01 | 0 | 0,22 | 0,36 |
| | 600 nm | | | | 0,06 | 0,11 | 0,02 | 0,01 | 0 | 0 | 0,2 | 0,31 |
| | 700 nm | | | | 0,05 | 0,09 | 0,02 | 0 | 0 | 0 | 0,19 | 0,28 |
| | 800 nm | | | | 0,05 | 0,08 | 0,02 | 0 | 0 | 0 | 0,18 | 0,24 |
| UV fest [Extinktion] | 400 nm | | | | 0,10 | 0,14 | -0,01 | -0,03 | 0,01 | 0,11 | | |
| | 500 nm | | | | 0,03 | 0,12 | -0,02 | -0,03 | 0,00 | 0,01 | | |
| | 600 nm | | | | 0,01 | 0,12 | -0,03 | -0,03 | 0,00 | -0,02 | | |
| | 700 nm | | | | 0,00 | 0,11 | -0,03 | -0,03 | 0,00 | -0,02 | | |
| | 800 nm | | | | -0,01 | 0,12 | -0,03 | -0,03 | 0,00 | -0,03 | | |
| Viskosität [Pas] | | | | | 2,73 | 0,37 | 0,27 | 0,33 | 1,69 | 4,05 | 1,19 | 1,66 |
| Schergefälle [1/s] | | | | | 40,34 | 81,20 | 37,50 | 30,50 | 41,50 | 42,00 | 42,00 | 42,30 |
| Schlagzähigkeit [j/cm$^2$] | | | | | 0,11 | 0,02 | 0,02 | 0,02 | 0,13 | 0,06 | | |

(fortgesetzt)

| **Rezeptur →<br>Ausprägung ↓** | | **Molmasse** | **mmol OH /g** | | **Bsp.1** | **Bsp. 2** | **Bsp. 3** | **Bsp. 4** | **Bsp. 5** | **Bsp. 6** | **Bsp. 7** | **Bsp. 8** |
|---|---|---|---|---|---|---|---|---|---|---|---|---|
| Bruchbild | | | | | vollständiger Bruch | vollständiger Bruch | vollständiger Bruch | vollständiger Bruch | teilw. Bruch | teilw. Bruch | | |
| Partikelgröße [nm] | | | | | 6,20 | 4,40 | 3,20 | 3,98 | | 3,50 | | 5,00 |
| Verteilungsbreite [nm] | | | | | 1,50 | 1,50 | 1,40 | 1,90 | | 1,50 | | 2,10 |
| Mol-Verhältnis NCO: OH | | | | | 1,72 | 1,72 | 1,72 | 1,72 | 1,78 | 1,04 | 1,08 | 1,25 |
| Mol-Verhältnis OH-kurz : OH-lang | | | | | 1,13 | 1,13 | 1,13 | 1,13 | 0,00 | 0,54 | 0,00 | 0,00 |
| Xn berechnet nach (1+r)/(1-r) | | | | | 3,79 | 3,79 | 3,79 | 3,79 | 3,55 | 56,78 | 26,39 | 9,12 |
| Zur Erklärung der Abkürzungen wird auf Punkt 1 - Chemikalien verwiesen | | | | | | | | | | | | |

## Patentansprüche

1. Nichtwässrige transparente Dispersion von Polyurethan(meth)acrylatpartikeln in einem Reaktivverdünner, die **dadurch** erhältlich ist, dass man ein Polyisocyanat mit mindestens einem Polyol und einem nukleophil funktionalisierten (Meth)acrylsäureester in dem Reaktivverdünner umsetzt,
**dadurch gekennzeichnet, dass**
die Polyurethan(meth)acrylatpartikel einen mittleren Durchmesser von weniger als 40 nm aufweisen.

2. Dispersion nach Anspruch 1, **dadurch gekennzeichnet, dass** die Polyurethan(meth)acrylatpartikel einen mittleren Durchmesser von weniger als 20 nm aufweisen.

3. Dispersion nach Anspruch 1, **dadurch gekennzeichnet, dass** die Polyurethan(meth)acrylatpartikel einen mittleren Durchmesser von weniger als 10 nm aufweisen.

4. Dispersion nach Anspruch 1 oder 2, **dadurch gekennzeichnet, dass** der Anteil an Polyurethan(meth)acrylatpartikeln 50-70 Gew.-% bezogen auf das Gesamtgewicht der Dispersion beträgt.

5. Dispersion nach einem oder mehreren der vorangehenden Ansprüche,
**dadurch gekennzeichnet, dass** der Reaktivverdünner ein (Meth)acrylat ist.

6. Dispersion nach Anspruch 5, **dadurch gekennzeichnet, dass** das (Meth)acrylat ausgewählt ist aus Methylmethacrylat und 2-Phenoxyethylmethacrylat.

7. Dispersion nach einem oder mehreren der vorangehenden Ansprüche, **dadurch gekennzeichnet, dass** das Polyisocyanat ausgewählt ist aus den aliphatischen und den cycloaliphatischen Diisocyanaten.

8. Dispersion nach einem oder mehreren der vorangehenden Ansprüche **dadurch gekennzeichnet, dass** das Molverhältnis der Isocyanatgruppen zu den Hydroxygruppen aus dem Polyol 1,03 bis 1,7 beträgt.

9. Dispersion nach einem oder mehreren der vorangehenden Ansprüche, **dadurch gekennzeichnet, dass** das Polyol ein hochmolekulargewichtiges Polyol mit einem Gewichtsmittel des Molekulargewichts von >500 bis 5.000 g/mol ist.

10. Dispersion nach Anspruch 9, **dadurch gekennzeichnet, dass** das hochmolekulargewichtige Polyol ausgewählt ist aus den Polybutadiendiolen, den Polytetrahydrofuranen und den trifunktionellen Polypropylenetherpolyolen aus Propylenoxid, Ethylenoxid und Glycerin.

11. Dispersion nach Anspruch 9-10, **dadurch** erhalten, dass zusätzlich zu dem hochmolekulargewichtigen Polyol ein niedermolekulargewichtiges Polyol mit einer Molmasse von 50 - 500 g/mol eingesetzt wird.

12. Dispersion nach Anspruch 11, **dadurch gekennzeichnet, dass** das niedermolekulargewichtige Polyol ausgewählt ist aus 1,4 Butandiol und 1,3 Propandiol.

13. Dispersion nach Anspruch 11-12, **dadurch gekennzeichnet, dass** das Molverhältnis der OH-Gruppen des niedermolekulargewichtigen Polyols zu den OH-Gruppen des hochmolekulargewichtigen Polyols 0,3 bis 1,2 beträgt.

14. Verfahren zur Herstellung einer Dispersion aus Polyurethan(meth)acrylatpartikeln wie in den Ansprüchen 1-13 beschrieben, bei dem man in einem Rührkessel ein Polyisocyanat mit mindestens einem Polyol und einem nukleophil funktionalisierten (Meth)acrylsäureester in einem Reaktivverdünner umsetzt,
**dadurch gekennzeichnet, dass**
man die Umsetzung bei einer Rührerumfangsgeschwindigkeit von mindestens 5 m/s durchführt, wobei das Verhältnis von Rührerdurchmesser zu Gefäßdurchmesser 0,3-0,80 beträgt und der Abstand des Rührers vom Gefäßboden das 0,25 bis 0,5 fache des Rührerdurchmessers beträgt.

15. Verfahren nach Anspruch 14, **dadurch gekennzeichnet, dass** die Rührerumfangsgeschwindigkeit mindestens 12 m/s beträgt.

16. Verfahren nach Anspruch 14 oder 15, **dadurch gekennzeichnet, dass** als Rührer eine Dispergierscheibe verwendet wird.

17. Verfahren nach Anspruch 14-16, **dadurch gekennzeichnet, dass** man das Verfahren in Gegenwart eines Katalysators ausführt, der ausgewählt ist aus den tertiären Aminen und/oder organischen Zinn-Verbindungen, insbesondere Dibutylzinndilaurat.

18. Verwendung einer Dispersion wie in den Ansprüchen 1-13 beschrieben als Dispersionsklebstoff oder als Bestandteil eines Dispersionsklebstoffes.

19. Verwendung einer Dispersion wie in den Ansprüchen 1-13 beschrieben als Gussglas oder als Bestandteil eines Gussglases.

20. Verwendung einer Dispersion wie in den Ansprüchen 1-13 beschrieben als schlagzähigkeitsverbesserndes Mittel in Formmassen, Klebstoffen und Gussgläsern.

21. Formkörper, erhalten durch Härtung einer Dispersion nach den Ansprüchen 1-13.

## Claims

1. Non-aqueous transparent dispersion of polyurethane (meth)acrylate particles in a reactive diluent, which dispersion is obtainable by reacting a polyisocyanate in the reactive diluent with at least one polyol and at least one (meth) acrylic acid ester which has been functionalised to be nucleophilic, **characterised in that** the polyurethane (meth) acrylate particles are of a mean diameter of less than 40 nm.

2. Dispersion according to claim 1, **characterised in that** the polyurethane (meth)acrylate particles are of a mean diameter of less than 20 nm.

3. Dispersion according to claim 1, **characterised in that** the polyurethane (meth)acrylate particles are of a mean diameter of less than 10 nm.

4. Dispersion according to claim 1 or 2, **characterised in that** the proportion of polyurethane (meth)acrylate particles is 50-70% by weight as a percentage of the total weight of the dispersion.

5. Dispersion according to one or more of the foregoing claims, **characterised in that** the reactive diluent is a (meth) acrylate.

6. Dispersion according to claim 5, **characterised in that** the (meth)acrylate is selected from methyl methacrylate and 2-phenoxyethyl methacrylate.

7. Dispersion according to one or more of the foregoing claims, **characterised in that** the polyisocyanate is selected from the aliphatic and cycloaliphatic diisocyanates.

8. Dispersion according to one or more of the foregoing claims, **characterised in that** the molar ratio of the isocyanate groups to the hydroxyl groups from the polyol is 1.03 to 1.7.

9. Dispersion according to one or more of the foregoing claims, **characterised in that** the polyol is a polyol of high molecular weight of a weight average molecular weight of >500 to 5,000 g/mol.

10. Dispersion according to claim 9, **characterised in that** the polyol of high molecular weight is selected from the polybutadiene diols, the polytetrahydrofurans and the trifunctional polypropylene ether polyols composed of propylene oxide, ethylene oxide and glycerin.

11. Dispersion according to claims 9 and 10, obtained by using, in addition to the polyol of high molecular weight, a polyol of low molecular weight having a molar mass of 50 to 500 g/mol.

12. Dispersion according to claim 11, **characterised in that** the polyol of low molecular weight is selected from 1,4-butane diol and 1,3-propane diol.

13. Dispersion according to claims 11 and 12, **characterised in that** the molar ratio of the OH groups of the polyol of

low molecular weight to the OH groups of the polyol of high molecular weight is 0.3 to 1.2.

**14.** Method of producing a dispersion of polyurethane (meth)acrylate particles as described in claims 1 to 13, in which, in an agitation vessel, a polyisocyanate is reacted in a reactive diluent with at least one polyol and at least one (meth)acrylic acid ester which has been functionalised to be nucleophilic, **characterised in that** the reaction is performed at a peripheral speed for the agitator of at least 5 m/s, the ratio of the diameter of the agitator to the diameter of the vessel is 0.3 to 0.8, and the distance between the agitator and the floor of the vessel is 0.25 to 0.5 times the diameter of the agitator.

**15.** Method according to claim 14, **characterised in that** the peripheral speed of the agitator is at least 12 m/s.

**16.** Method according to claim 14 or 15, **characterised in that** what is used as an agitator is a dispersing disc.

**17.** Method according to claims 14 to 16, **characterised in that** the method is carried out in the presence of a catalyst which is selected from the tertiary amines and/or organic compounds of tin and in particular dibutyl tin dilaurate.

**18.** Use of a dispersion as described in claims 1 to 13 as a dispersion adhesive or as a constituent of a dispersion adhesive.

**19.** Use of a dispersion as described in claims 1 to 13 as moulded glass-like material or as a constituent of a moulded glass-like material.

**20.** Use of a dispersion as described in claims 1 to 13 as a means of improving impact toughness in moulding materials, adhesives and moulded glass-like materials.

**21.** Moulded body obtained by curing a dispersion according to claims 1 to 13.

**Revendications**

**1.** Dispersion transparente non aqueuse de particules de poly((méth)acrylate d'uréthane) dans un diluant réactif, laquelle est obtenue en faisant réagir un poly(isocyanate) avec au moins un polyol et un ester d'acide (méth)acrylique fonctionnalisé nucléophile dans le diluant réactif,
**caractérisée en ce que**
les particules de poly((méth)acrylate d'uréthane) ont un diamètre moyen inférieur à 40 nm.

**2.** Dispersion selon la revendication 1, **caractérisée en ce que** les particules de poly((méth)acrylate d'uréthane) ont un diamètre moyen inférieur à 20 nm.

**3.** Dispersion selon la revendication 1, **caractérisée en ce que** les particules de poly((méth)acrylate d'uréthane) ont un diamètre moyen inférieur à 10 nm.

**4.** Dispersion selon la revendication 1 ou 2, **caractérisée en ce que** la proportion de particules de poly((méth)acrylate d'uréthane) est de 50 à 70 % en poids par rapport au poids total de la dispersion.

**5.** Dispersion selon une ou plusieurs des revendications précédentes, **caractérisée en ce que** le diluant réactif est un (méth)acrylate.

**6.** Dispersion selon la revendication 5, **caractérisée en ce que** le (méth)acrylate est choisi parmi le méthacrylate de méthyle et le méthacrylate de 2-phénoxyéthyle.

**7.** Dispersion selon une ou plusieurs des revendications précédentes, **caractérisée en ce que** le poly(isocyanate) est choisi parmi les diisocyanates aliphatiques et cycloaliphatiques.

**8.** Dispersion selon une ou plusieurs des revendications précédentes, **caractérisée en ce que** le rapport molaire des groupes isocyanate aux groupes hydroxy du polyol est de 1,03 à 1,7.

**9.** Dispersion selon une ou plusieurs des revendications précédentes, **caractérisée en ce que** le polyol est un polyol de poids moléculaire élevé ayant un poids moléculaire moyen en poids de > 500 à 5 000 g/mol.

**10.** Dispersion selon la revendication 9, **caractérisée en ce que** le polyol de poids moléculaire élevé est choisi parmi les poly(butadiènediols), les poly(tétrahydrofuranes) et les poly(propylèneétherpolyols) trifonctionnels de l'oxyde de propylène, de l'oxyde d'éthylène et de la glycérine.

**11.** Dispersion selon les revendications 9 et 10, obtenue en ajoutant en plus du polyol de poids moléculaire élevé un polyol de poids moléculaire bas ayant une masse molaire de 50 à 500 g/mol.

**12.** Dispersion selon la revendication 11, **caractérisée en ce que** le polyol de poids moléculaire bas est choisi parmi le 1,4-butanediol et le 1,3-propanediol.

**13.** Dispersion selon les revendications 11 et 12, **caractérisée en ce que** le rapport molaire des groupes OH du polyol de poids moléculaire bas aux groupes OH du polyol de poids moléculaire élevé est de 0,3 à 1,2.

**14.** Procédé de préparation d'une dispersion à partir de particules de poly((méth)acrylate d'uréthane) comme décrit dans les revendications 1 à 13, dans lequel on fait réagir, dans un mélangeur, un poly(isocyanate) avec au moins un polyol et un ester d'acide (méth)acrylique fonctionnalisé nucléophile dans un diluant réactif,
**caractérisé en ce que**
l'on effectue la réaction avec une vitesse d'agitation d'au moins 5 m/s, moyennant quoi le rapport du diamètre de l'agitateur au diamètre du récipient est de 0,3 à 0,80 et l'espacement de l'agitateur au fond du récipient est égal à 0,25 à 0,5 fois le diamètre de l'agitateur.

**15.** Procédé selon la revendication 14, **caractérisé en ce que** la vitesse d'agitation est d'au moins 12 m/s.

**16.** Procédé selon la revendication 14 ou 15, **caractérisé en ce que** l'on utilise en tant qu'agitateur un disque de dispersion.

**17.** Procédé selon les revendications 14 à 16, **caractérisé en ce que** l'on effectue le procédé en présence d'un catalyseur choisi parmi les amines tertiaires et/ou les composés organiques du zinc, en particulier le dilaurate de dibutylzinc.

**18.** Utilisation d'une dispersion comme décrit dans les revendications 1 à 13 en tant qu'adhésif en dispersion ou en tant que constituant d'un adhésif en dispersion.

**19.** Utilisation d'une dispersion comme décrit dans les revendications 1 à 13 en tant que verre coulé ou en tant que constituant d'un verre coulé.

**20.** Utilisation d'une dispersion comme décrit dans les revendications 1 à 13 en tant que moyen améliorant la résistance aux chocs dans des matières moulées, des adhésifs et des verres coulés.

**21.** Corps moulé obtenu par durcissement d'une dispersion selon les revendications 1 à 13.

Abbildung 1: Vergleich UV-Spektren

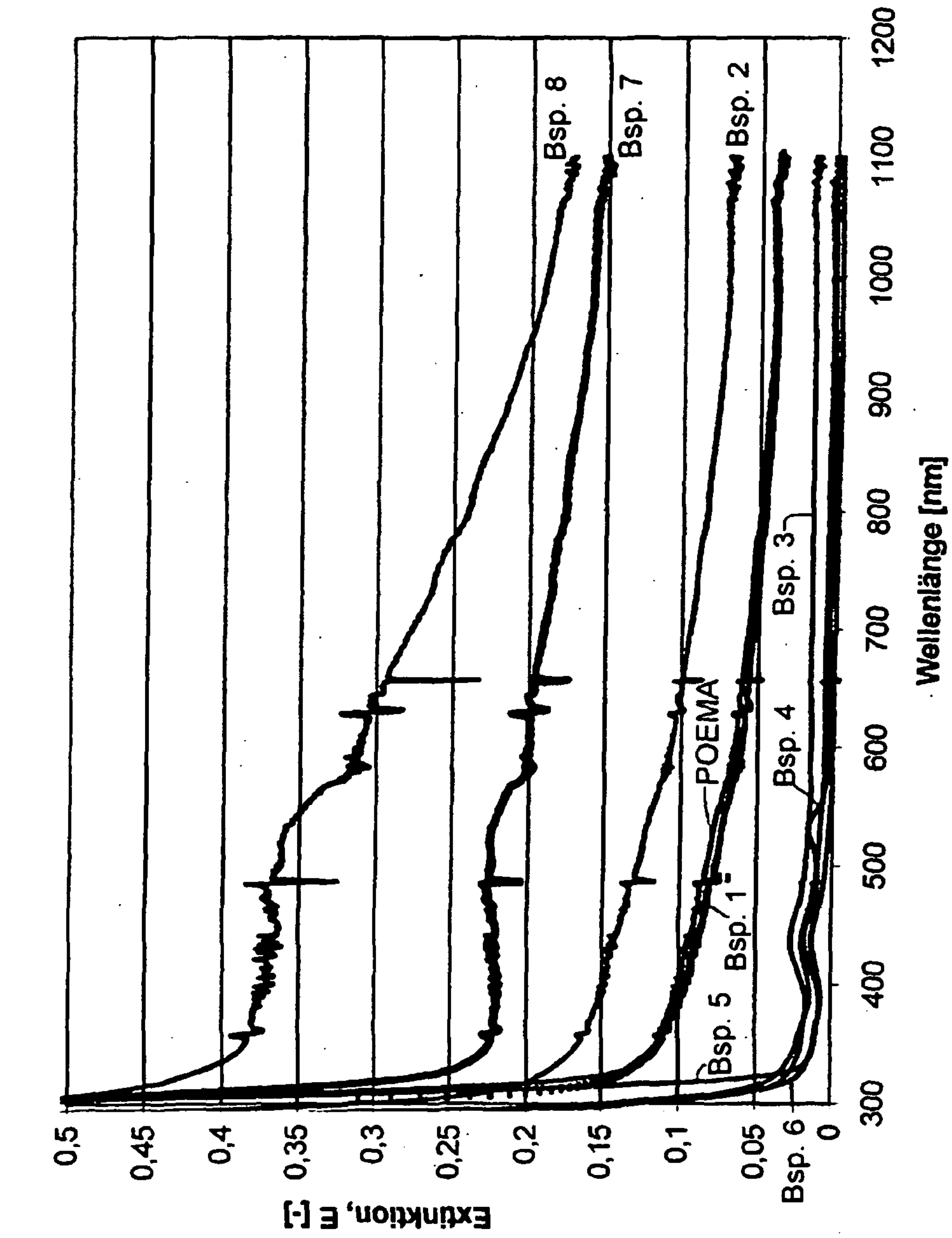

Abbildung 2: Vergleich UV-Spektren fest

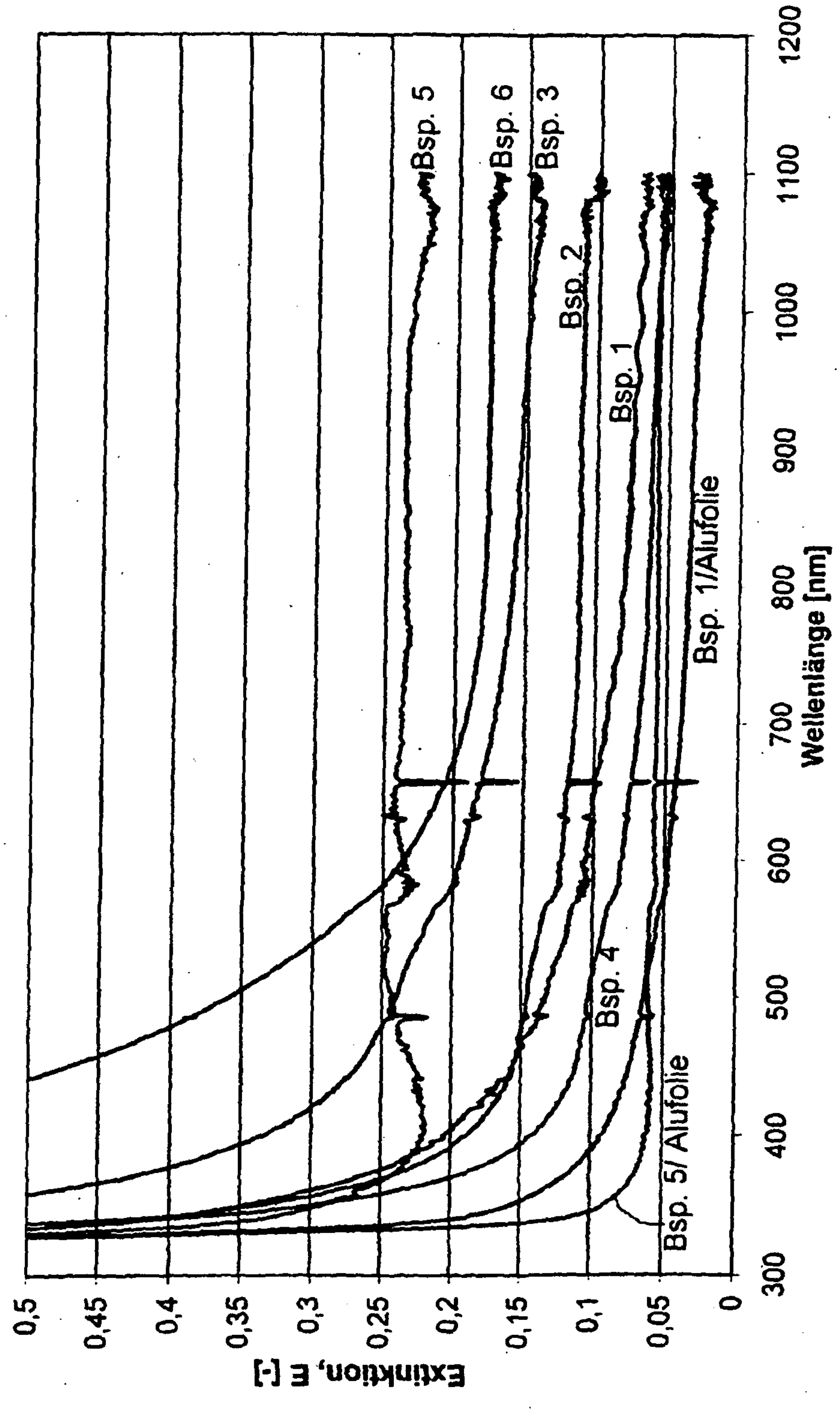

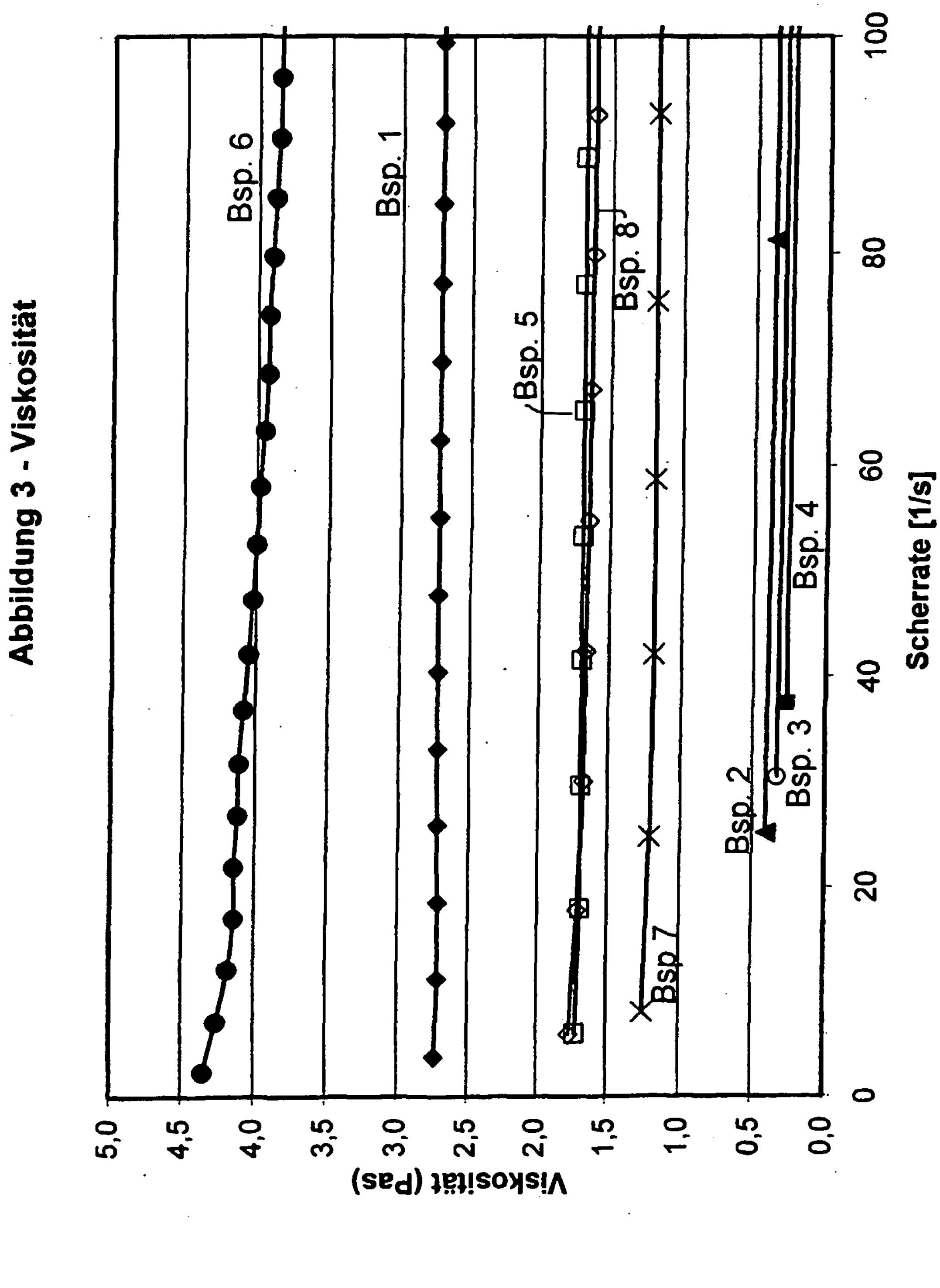
Abbildung 3 - Viskosität
Viskosität (Pas)
5,0
4,5
4,0
3,5
3,0
2,5
2,0
1,5
1,0
0,5
0,0
0
20
40
60
80
100
Scherrate [1/s]
Bsp. 6
Bsp. 1
Bsp. 5
Bsp. 8
Bsp. 7
Bsp. 2
Bsp. 3
Bsp. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3248132
- DE 3513248
- EP 0320690 A
- EP 0318939 A
- DE 2439352 A
- DE 1568838
- GB 1308250 A